# EUROPEAN PATENT SPECIFICATION

(11) **EP 3 011 775 B1**
(45) Date of publication and mention of the grant of the patent: **06.07.2022**
(21) Application number: 14735075.5
(22) Date of filing: 10.06.2014
(51) Int. Cl.: H04L 47/41, H04L 47/125, H04L 12/54, H04L 69/14, H04W 76/16, H04W 40/24, H04W 88/06, H04W 88/10, H04W 84/12, H04W 40/12

(54) **LTE AND EXTERNAL WIFI BANDWIDTH AGGREGATION**
LTE UND EXTERNE WIFI-BANDBREITENAGGREGATION
AGRÉGATION DE BANDES PASSANTES LTE ET WIFI EXTERNE

(30) Priority: 18.06.2013 US 201313920832
(43) Date of publication of application: 27.04.2016
(73) Proprietor: Qualcomm Incorporated, San Diego, CA 92121-1714 (US)
(72) Inventor: LEE, Yong Sang, San Diego, California 92121-1714 (US); SOLIMAN, Samir Salib, San Diego, California 92121-1714 (US); DAS, Soumya, San Diego, California 92121-1714 (US); SONG, Bongyong, San Diego, California 92121-1714 (US)
(74) Representative: Carstens, Dirk Wilhelm
(86) International application number: PCT/US2014/041701
(87) International publication number: WO 2014/204716

(56) References cited:
- EP-A1- 2 451 218
- WO-A1-2010/121205
- WO-A1-2011/100492
- US-A1- 2007 104 218
- US-A1- 2008 125 163
- US-A1- 2009 129 346
- US-A1- 2012 134 308
- US-A1- 2012 188 949
- PAUL FUXJAGER ET AL: "Radio resource allocation in urban femto-WiFi convergence scenarios", PROC. OF 2010 6TH CONFERENCE ON NEXT GENERATION INTERNET (NGI 2010), 2-4 JUNE 2010, PARIS, FRANCE, IEEE, PISCATAWAY, NJ, USA, 2 June 2010 (2010-06-02), pages 1-8, XP031722258, ISBN: 978-1-4244-8167-5
- Small Cell Forum Ltd: "Integrated Femto-WiFi (IFW) Networks", , 28 February 2012 (2012-02-28), XP055145624, Retrieved from the Internet: URL:http://www.smallcellforum.org/smallcel lforum_resources/pdfsend01.php?file=Integr ated-Femto-WiFi-Networks-White-Paper_sm.pd f [retrieved on 2014-10-10]
- KONSTANTINOS SAMDANIS ET AL: "Traffic Offload Enhancements for eUTRAN", IEEE COMMUNICATIONS SURVEYS, IEEE, NEW YORK, NY, US, vol. 14, no. 3, 1 July 2012 (2012-07-01), pages 884-896, XP011454973, ISSN: 1553-877X, DOI: 10.1109/SURV.2011.072711.00168
- SINH CHUNG NGUYEN ET AL: "Evaluation of multipath TCP load sharing with coupled congestion control option in heterogeneous networks", GLOBAL INFORMATION INFRASTRUCTURE SYMPOSIUM (GIIS), 2011, IEEE, 4 August 2011 (2011-08-04), pages 1-5, XP031940925, DOI: 10.1109/GIIS.2011.6026698 ISBN: 978-1-4577-1262-3
- FORD ROKE MANOR RESEARCH C RAICIU M HANDLEY UNIVERSITY COLLEGE LONDON S BARRE UNIVERSITE CATHOLIQUE DE LOUVAIN J IYENGAR FRANKLIN: "Architectural Guidelines for Multipath TCP Development; rfc6182.txt", ARCHITECTURAL GUIDELINES FOR MULTIPATH TCP DEVELOPMENT; RFC6182.TXT, INTERNET ENGINEERING TASK FORCE, IETF; STANDARD, INTERNET SOCIETY (ISOC) 4, RUE DES FALAISES CH- 1205 GENEVA, SWITZERLAND, 22 March 2011 (2011-03-22), pages 1-28, XP015075927, [retrieved on 2011-03-22]

## Description

### BACKGROUND

A Long Term Evolution (LTE) femtocell may be installed in a home or workplace to serve as a wireless base station for a mobile communications network. The femtocell typically connects to the mobile communication network provider's network via a broadband connection at the home or workplace. For example, a femtocell may be connected to a Digital Subscriber Line (DSL) router or a cable modem via an Ethernet connection or other wired or wireless network connection.

The femtocell can be configured to serve as the primary interface from a User Equipment (UE) or other mobile device, such as a smartphone, a tablet computer, or other types of mobile device that are configured to communicate using the LTE wireless communication protocols. However, LTE femtocells can be subject to severe and uncoordinated interference from a macrocell and/or one or more neighboring femtocells and radio conditions may vary over time and space.

The mobile device may also include a WiFi interface or other short-range wifeless communication interface that can be used to communicate with a WiFi wireless access point in the home or workplace. The WiFi interface can be used to send and receive data from WiFi access points and/or other devices that include a WiFi interface. Attention is drawn to the document "Radio resource allocation in urban femtoWiFi convergence scenarios", by Paul Fuxjager et al. Attention is drawn to the document "Integrated Femto-WiFi (IFW) Networks" of the Small Cell Forum Ltd.

### Summary

The invention is defined by the appended claims.

An example method for aggregating wireless communications traffic in a femtocell according to the disclosure includes: receiving at a femtocell a stream of data packets for a mobile device from a wireless transceiver; selecting a transmission mode, for sending data packets of the stream of data packets from the femtocell to the mobile device, the selecting comprising determining whether to transmit the data packets from the stream of data packets to the mobile device using a first transmission mode comprising transmitting the data packets from the stream via a Long Term Evolution (LTE) interface of the femtocell, to send the data packets to the wireless transceiver for transmission to the mobile device using a second transmission mode comprising transmitting the data packets from the stream via a WiFi interface of the wireless transceiver, or to transmit the data packets from the data stream using a third transmission mode comprising transmitting a first portion of the data packets to the mobile device via the LTE interface and sending a second portion of the data packets to the wireless transceiver for transmission to the mobile device via the WiFi interface; and sending the data packets according to the selected transmission mode.

Implementations of such a method may include one or more of the following features. The wireless transceiver is a wireless transceiver of a wireless router. Selecting the transmission mode includes selecting the transmission mode based at least in part on link conditions of an LTE link between the femtocell and the mobile device. Selecting the transmission mode includes selecting the transmission mode based at least in part on link conditions of a WiFi link between the wireless transceiver and the mobile device. Selecting the transmission mode includes selecting the transmission mode based at least in part on loading of an LTE link between the femtocell and the mobile device. Selecting the transmission mode comprises includes the transmission mode based at least in part on loading of a WiFi link between the wireless transceiver and the mobile device. Selecting the transmission mode includes selecting the transmission mode based at least in part on at least on loading of a backhaul of the femtocell. Sending the data packets according to the selected transmission mode includes encapsulating packets transmitted from the femtocell to the mobile device. Determining whether the wireless router provides bridging functionality, and the encapsulating packets transmitted from the femtocell to the mobile device is performed if the wireless router does not provide bridging functionality. Sending a signal to the mobile device indicating a start of an aggregate data session in response to the third transmission mode being selected. Sending a signal to the mobile device indicating an end of the aggregate data session after sending the data packets according to the third transmission mode. Selecting the second transmission mode for LTE user plane data, and selecting the first transmission mode for LTE control plane data. Sending an aggregation discovery message to the mobile device; receiving an aggregation discovery response from the mobile device; transmitting first aggregation information to the mobile device; receiving second aggregation information from the mobile device; and configuring an aggregation layer of the femtocell based on the first aggregation information and the second aggregation information. The first aggregation information comprises aggregation policy information. Testing WiFi connectivity with the mobile device.

An apparatus for aggregating wireless communications traffic in a femtocell according to the disclosure includes: means for receiving at a femtocell a stream of data packets for a mobile device from a wireless transceiver; means for selecting a transmission mode, for sending data packets of the stream of data packets from the femtocell to the mobile device, the means for selecting comprising means for determining whether to transmit the data packets from the stream of data packets to the mobile device using a first transmission mode comprising transmitting the data packets from the stream via a Long Term Evolution (LTE) interface of the femtocell, to send the data packets to the wireless transceiver for transmission to the mobile device using a second transmission mode comprising transmitting the data packets from the stream via a WiFi interface of the wireless transceiver, or to transmit the data packets from the data stream using a third transmission mode comprising transmitting a first portion of the data packets to the mobile device via the LTE interface and sending a second portion of the data packets to the wireless transceiver for transmission to the mobile device via the WiFi interface; and means for sending the data packets according to the selected transmission mode.

Implementations of such an apparatus may include one or more of the following features. The wireless transceiver is a wireless transceiver of a wireless router. The means for selecting the transmission mode includes means for selecting the transmission mode based at least in part on link conditions of an LTE link between the femtocell and the mobile device. The means for selecting the transmission mode includes means for selecting the transmission mode based at least in part on link conditions of a WiFi link between the femtocell and the mobile device. The means for selecting the transmission mode includes means for selecting the transmission mode based at least in part on loading of an LTE link between the femtocell and the mobile device. The means for selecting the transmission mode includes means for selecting the transmission mode based at least in part on loading of a WiFi link between the femtocell and the mobile device. The means for selecting the transmission mode includes means for selecting the transmission mode based at least in part on at least on loading of a backhaul of the femtocell. The means for sending the data packets according to the selected transmission mode includes means for encapsulating packets transmitted from the femtocell to the mobile device. Means for determining whether the wireless router provides bridging functionality, and the means for encapsulating packets transmitted from the femtocell to the mobile device includes means for encapsulating the packets if the wireless router does not provide bridging functionality. Means for sending a signal to the mobile device indicating a start of an aggregate data session in response to the third transmission mode being selected. Means for sending a signal to the mobile device indicating an end of the aggregate data session after sending the data packets according to the third transmission mode. Means for selecting the second transmission mode for LTE user plane data, and means for selecting the first transmission mode for LTE control plane data. Means for sending an aggregation discovery message to the mobile device; means for receiving an aggregation discovery response from the mobile device; means for transmitting first aggregation information to the mobile device; means for receiving second aggregation information from the mobile device; and means for configuring an aggregation layer of the femtocell based on the first aggregation information and the second aggregation information. The first aggregation information comprises aggregation policy information. Means for testing WiFi connectivity with the mobile device.

A tangible computer-readable medium, having stored thereon computer-readable instructions for aggregating wireless communications traffic in a femtocell, according to the disclosure includes instructions configured to cause a computer to: receive at a femtocell a stream of data packets for a mobile device from a wireless transceiver; select a transmission mode, for sending data packets of the stream of data packets from the femtocell to the mobile device, the instructions configured to cause the computer to select the transmission mode comprising instructions to cause the computer to determine whether to transmit the data packets from the stream of data packets to the mobile device using a first transmission mode comprising transmitting the data packets from the stream via a Long Term Evolution (LTE) interface of the femtocell, to send the data packets to the wireless transceiver for transmission to the mobile device using a second transmission mode comprising transmitting the data packets from the stream via a WiFi interface of the wireless transceiver, or to transmit the data packets from the data stream using a third transmission mode comprising transmitting a first portion of the data packets to the mobile device via the LTE interface and sending a second portion of the data packets to the wireless transceiver for transmission to the mobile device via the WiFi interface; and send the data packets according to the selected transmission mode.

Implementations of such a tangible computer-readable medium may include one or more of the following features. The wireless transceiver is a wireless transceiver of a wireless router. The instructions configured to cause the computer to select the transmission mode include instructions configured to cause the computer to select the transmission mode based at least in part on link conditions of an LTE link between the femtocell and the mobile device. The instructions configured to cause the computer to select the transmission mode include instructions configured to cause the computer to select the transmission mode based at least in part on link conditions of a WiFi link between the femtocell and the mobile device. The instructions configured to cause the computer to select the transmission mode include instructions configured to cause the computer to select the transmission mode based at least in part on loading of an LTE link between the femtocell and the mobile device. The instructions configured to cause the computer to select the transmission mode include instructions configured to cause the computer to select the transmission mode based at least in part on loading of a WiFi link between the femtocell and the mobile device. The instructions configured to cause the computer to select the transmission mode include instructions configured to cause the computer to select the transmission mode based at least in part on at least on loading of a backhaul of the femtocell. The instructions configured to cause the computer to send the data packets according to the selected transmission mode include instructions configured to cause the computer to encapsulate packets transmitted from the femtocell to the mobile device. Instructions configured to cause the computer to determine whether the wireless router provides bridging functionality, and wherein the instructions configured to cause the computer to encapsulate the packets comprise instructions configured to cause the computer to encapsulate the packets transmitted from the femtocell to the mobile device is performed if the wireless router does not provide bridging functionality. Instructions configured to cause the computer to send a signal to the mobile device indicating a start of an aggregate data session in response to the third transmission mode being selected. Instructions configured to cause the computer to send a signal to the mobile device indicating an end of the aggregate data session after sending the data packets according to the third transmission mode. The instructions configured to cause the computer to select a transmission mode include instructions configured to cause the computer to select the second transmission mode for LTE user plane data, and select the first transmission mode for LTE control plane data. The instructions configured to cause the computer to send an aggregation discovery message to the mobile device, receive an aggregation discovery response from the mobile device, transmit first aggregation information to the mobile device, receive second aggregation information from the mobile device, and configure an aggregation layer of the femtocell based on the first aggregation information and the second aggregation information. The first aggregation information comprises aggregation policy information. Instructions configured to cause the computer to test WiFi connectivity with the mobile device.

An apparatus for aggregating wireless communications traffic in a femtocell according to the disclosure includes a tangible, non-transitory computer-readable memory; a plurality of modules comprising processor executable code stored in the memory; a processor connected to the memory and configured to access the plurality of modules stored in the memory; and a data aggregation module. The data aggregation module is configured to receive at a femtocell a stream of data packets for a mobile device from a wireless transceiver; select a transmission mode, for sending data packets of the stream of data packets from the femtocell to the mobile device, the data aggregation module being further configured to determine whether to transmit the data packets from the stream of data packets to the mobile device using a first transmission mode comprising transmitting the data packets from the stream via a Long Term Evolution (LTE) interface of the femtocell, to send the data packets to the wireless transceiver for transmission to the mobile device using a second transmission mode comprising transmitting the data packets from the stream via a WiFi interface of the wireless transceiver, or to transmit the data packets from the data stream using a third transmission mode comprising transmitting a first portion of the data packets to the mobile device via the LTE interface and sending a second portion of the data packets to the wireless transceiver for transmission to the mobile device via the WiFi interface; and send the data packets according to the selected transmission mode.

Implementations of such an apparatus may include one or more of the following features. The wireless transceiver is a wireless transceiver of a wireless router. The data aggregation module is further configured to select the transmission mode based at least in part on link conditions of an LTE link between the femtocell and the mobile device. The data aggregation module being configured to select the transmission mode is further configured to cause the computer to select the transmission mode based at least in part on link conditions of a WiFi link between the femtocell and the mobile device. The data aggregation module being configured to select the transmission mode is further configured to select the transmission mode based at least in part on loading of an LTE link between the femtocell and the mobile device. The data aggregation module being configured to select the transmission mode is further configured to select the transmission mode based at least in part on loading of a WiFi link between the femtocell and the mobile device. The data aggregation module being configured to select the transmission mode is further configured to select the transmission mode based at least in part on at least on loading of a backhaul of the femtocell. The data aggregation module being configured to send the data packets according to the selected transmission mode is further configured to encapsulate packets transmitted from the femtocell to the mobile device. The data aggregation module is configured to determine whether the wireless router provides bridging functionality, and wherein the data aggregation module is configured to encapsulate packets transmitted from the femtocell to the mobile device if the wireless router does not provide bridging functionality. The data aggregation module is further configured to send a signal to the mobile device indicating a start of an aggregate data session in response to the third transmission mode being selected. The data aggregation module is further configured to send a signal to the mobile device indicating an end of the aggregate data session after sending the data packets according to the third transmission mode. The data aggregation module is configured to select the second transmission mode for LTE user plane data, and select the first transmission mode for LTE control plane data. The data aggregation module is configured to send an aggregation discovery message to the mobile device, receive an aggregation discovery response from the mobile device, transmit first aggregation information to the mobile device, receive second aggregation information from the mobile device, and configure an aggregation layer of the femtocell based on the first aggregation information and the second aggregation information. The first aggregation information comprises aggregation policy information. The data aggregation module is further configured to test WiFi connectivity with the mobile device.

A method for aggregating wireless communications traffic in a mobile device according to the disclosure includes receiving a first portion of data packets from a data stream from a femtocell using a first wireless communications protocol, receiving a second portion of data packets from the data stream from a wireless transceiver using a second wireless communications protocol, the wireless transceiver being separate from the femtocell, aggregating the first portion of the data packets and the second portion of the data packets to reassemble the data stream at the mobile device.

Implementations of such a method may include one or more of the following features. Receiving a signal from the femtocell indicating a start of an aggregate data session prior to receiving the first portion of the data packet and the second portion of the data packets. Receiving a signal from the femtocell indicating an end of the aggregate data session after receiving the first portion of the data packet and the second portion of the data packets. The wireless transceiver is a wireless transceiver of a wireless router.

An example apparatus for aggregating wireless communications traffic in a mobile device according to the disclosure includes means for receiving a first portion of data packets from a data stream from a femtocell using a first wireless communications protocol, means for receiving a second portion of data packets from the data stream from a wireless transceiver using a second wireless communications protocol, the wireless transceiver being separate from the femtocell, and means for aggregating the first portion of the data packets and the second portion of the data packets to reassemble the data stream at the mobile device.

Implementations of such an apparatus may include one or more of the following features. Means for receiving a signal from the femtocell indicating a start of an aggregate data session prior to receiving the first portion of the data packet and the second portion of the data packets. Means for receiving a signal from the femtocell indicating an end of the aggregate data session after receiving the first portion of the data packet and the second portion of the data packets. The wireless transceiver is a wireless transceiver of a wireless router.

An example tangible computer-readable medium, having stored thereon computer-readable instructions for aggregating wireless communications traffic in a mobile device, according to the disclosure includes instructions configured to cause a computer to: receive a first portion of data packets from a data stream from a femtocell using a first wireless communications protocol, receive a second portion of data packets from the data stream from a wireless transceiver using a second wireless communications protocol, the wireless transceiver being separate from the femtocell, and aggregate the first portion of the data packets and the second portion of the data packets to reassemble the data stream at the mobile device.

Implementations of such a tangible computer-readable medium may include one or more of the following features. Instructions configured to cause the computer to receive a signal from the femtocell indicating a start of an aggregate data session prior to receiving the first portion of the data packet and the second portion of the data packets. Instructions configured to cause the computer to receive a signal from the femtocell indicating an end of the aggregate data session after receiving the first portion of the data packet and the second portion of the data packets. The wireless transceiver is a wireless transceiver of a wireless router.

An example apparatus for aggregating wireless communications traffic in a mobile device according to the disclosure includes a tangible, non-transitory computer-readable memory, a plurality of modules comprising processor executable code stored in the memory, a processor connected to the memory and configured to access the plurality of modules stored in the memory, and a data aggregation module configured to receive a first portion of data packets from a data stream from a femtocell using a first wireless communications protocol, receive a second portion of data packets from the data stream from a wireless transceiver using a second wireless communications protocol, the wireless transceiver being separate from the femtocell, and aggregate the first portion of the data packets and the second portion of the data packets to reassemble the data stream at the mobile device.

Implementations of such an apparatus may include one or more of the following features. The data aggregation module is further configured to cause the computer to receive a signal from the femtocell indicating a start of an aggregate data session prior to receiving the first portion of the data packet and the second portion of the data packets. The data aggregation module is further configured to receive a signal from the femtocell indicating an end of the aggregate data session after receiving the first portion of the data packet and the second portion of the data packets. The wireless transceiver is a wireless transceiver of a wireless router.

An example method for aggregating wireless communications traffic in a mobile device includes receiving at an aggregation module of a mobile device a stream of data packets to be transmitted to a remote network entity; selecting a transmission mode, for sending data packets of the stream of data packets from the mobile device to a femtocell associated with the mobile device, the selecting comprising determining whether to transmit the data packets from the stream of data packets to the femtocell using a first transmission mode comprising transmitting the data packets from the stream via a Long Term Evolution (LTE) interface of the mobile device, to transmit the data packets to a wireless transceiver external to the femtocell for routing to the femtocell using a second transmission mode comprising transmitting the data packets from the stream via a WiFi interface of the mobile device, or to transmit the data packets from the data stream using a third transmission mode comprising transmitting a first portion of the data packets to the femtocell via the LTE interface and transmitting a second portion of the data packets to the wireless transceiver via a WiFi interface for routing to the femtocell; and sending the data packets according to the selected transmission mode.

Implementations of such a method may include one or more of the following features. Selecting the transmission mode includes selecting the transmission mode based at least in part on link conditions of an LTE link between the femtocell and the mobile device. Selecting the transmission mode includes selecting the transmission mode based at least in part on link conditions of a WiFi link between the femtocell and the mobile device. Selecting the transmission mode includes selecting the transmission mode based at least in part on loading of an LTE link between the femtocell and the mobile device. Selecting the transmission mode includes selecting the transmission mode based at least in part on loading of a WiFi link between the femtocell and the mobile device. Sending the data packets according to the selected transmission mode includes encapsulating packets transmitted from the mobile device to the femtocell. Sending a signal to the femtocell indicating a start of an aggregate data session in response to the third transmission mode being selected. Sending a signal to the femtocell indicating the end of the aggregate data session after sending the data packets according to the third transmission mode. The wireless transceiver is a wireless transceiver of a wireless router. Selecting a transmission mode includes selecting the second transmission mode for LTE user plane data, and selecting the first transmission mode for LTE control plane data. Sending an aggregation discovery message to the femtocell, receiving an aggregation discovery response from the femtocell, transmitting first aggregation information to the femtocell, receiving second aggregation information from the femtocell, and configuring an aggregation layer of the mobile device based on the first aggregation information and the second aggregation information. The first aggregation information comprises aggregation policy information. Testing WiFi connectivity with the femtocell.

An example apparatus for aggregating wireless communications traffic in a mobile device includes means for receiving at an aggregation module of a mobile device a stream of data packets to be transmitted to a remote network entity; means for selecting a transmission mode, for sending data packets of the stream of data packets from the mobile device to a femtocell associated with the mobile device, the selecting comprising determining whether to transmit the data packets from the stream of data packets to the femtocell using a first transmission mode comprising transmitting the data packets from the stream via a Long Term Evolution (LTE) interface of the mobile device, to transmit the data packets to a wireless transceiver external to the femtocell for routing to the femtocell using a second transmission mode comprising transmitting the data packets from the stream via a WiFi interface of the mobile device, or to transmit the data packets from the data stream using a third transmission mode comprising transmitting a first portion of the data packets to the femtocell via the LTE interface and transmitting a second portion of the data packets to the wireless transceiver via a WiFi interface for routing to the femtocell; and means for sending the data packets according to the selected transmission mode.

Implementations of such an apparatus may include one or more of the following features. The means for selecting the transmission mode includes means for selecting the transmission mode based at least in part on link conditions of an LTE link between the femtocell and the mobile device. The means for selecting the transmission mode includes means for selecting the transmission mode based at least in part on link conditions of a WiFi link between the femtocell and the mobile device. The means for selecting the transmission mode includes means for selecting the transmission mode based at least in part on loading of an LTE link between the femtocell and the mobile device. The means for selecting the transmission mode includes means for selecting the transmission mode based at least in part on loading of a WiFi link between the femtocell and the mobile device. The means for sending the data packets according to the selected transmission mode includes means for encapsulating packets transmitted from the mobile device to the femtocell. Means for sending a signal to the femtocell indicating a start of an aggregate data session in response to the third transmission mode being selected. Means for sending a signal to the femtocell indicating the end of the aggregate data session after sending the data packets according to the third transmission mode. The wireless transceiver is a wireless transceiver of a wireless router. The means for selecting the transmission mode includes means for selecting the second transmission mode for LTE user plane data, and means for selecting the first transmission mode for LTE control plane data. Means for sending an aggregation discovery message to the femtocell, means for receiving an aggregation discovery response from the femtocell, means for transmitting first aggregation information to the femtocell, means for receiving second aggregation information from the femtocell, and means for configuring an aggregation layer of the mobile device based on the first aggregation information and the second aggregation information. The first aggregation information comprises aggregation policy information. Means for testing WiFi connectivity with the femtocell.

An example computer-readable medium, having stored thereon computer-readable instructions for aggregating wireless communications traffic in a mobile device, according to the disclosure includes instructions configured to cause a computer to: receive at an aggregation module of a mobile device a stream of data packets to be transmitted to a remote network entity; select a transmission mode, for sending data packets of the stream of data packets from the mobile device to a femtocell associated with the mobile device, the selecting comprising determining whether to transmit the data packets from the stream of data packets to the femtocell using a first transmission mode comprising transmitting the data packets from the stream via a Long Term Evolution (LTE) interface of the mobile device, to transmit the data packets to a wireless transceiver external to the femtocell for routing to the femtocell using a second transmission mode comprising transmitting the data packets from the stream via a WiFi interface of the mobile device, or to transmit the data packets from the data stream using a third transmission mode comprising transmitting a first portion of the data packets to the femtocell via the LTE interface and transmitting a second portion of the data packets to the wireless transceiver via a WiFi interface for routing to the femtocell; and send the data packets according to the selected transmission mode.

Implementations of such a tangible computer-readable medium may include one or more of the following features. The instructions configured to cause the computer to select the transmission mode include instructions configured to cause the computer to select the transmission mode based at least in part on link conditions of an LTE link between the femtocell and the mobile device. The instructions configured to cause the computer to select the transmission mode include instructions configured to cause the computer to select the transmission mode based at least in part on link conditions of a WiFi link between the wireless transceiver and the mobile device. The instructions configured to cause the computer to select the transmission mode include instructions configured to cause the computer to select the transmission mode based at least in part on loading of an LTE link between the femtocell and the mobile device. The instructions configured to cause the computer to select the transmission mode include instructions configured to cause the computer to select the transmission mode based at least in part on loading of a WiFi link between the wireless transceiver and the mobile device. The instructions configured to cause the computer to send the data packets according to the selected transmission mode include instructions configured to cause the computer to encapsulate packets transmitted from the mobile device to the femtocell. Instructions configured to cause the computer to send a signal to the femtocell indicating a start of an aggregate data session in response to the third transmission mode being selected. Instructions configured to cause the computer to send a signal to the femtocell indicating an end of the aggregate data session after sending the data packets according to the third transmission mode. The wireless transceiver is a wireless transceiver of a wireless router. The instructions configured to cause the computer to select the transmission mode further comprise instructions configured to cause the computer to select the second transmission mode for LTE user plane data, and select the first transmission mode for LTE control plane data. Instructions configured to cause the computer to: send an aggregation discovery message to the femtocell, receive an aggregation discovery response from the femtocell, transmit first aggregation information to the femtocell, receive second aggregation information from the femtocell, and configure an aggregation layer of the mobile device based on the first aggregation information and the second aggregation information. The first aggregation information comprises aggregation policy information. Instructions configured to cause the computer to test WiFi connectivity with the mobile device.

An example apparatus for aggregating wireless communications traffic in a mobile device according to the disclosure includes a tangible, non-transitory computer-readable memory; a plurality of modules comprising processor executable code stored in the memory; a processor connected to the memory and configured to access the plurality of modules stored in the memory; and a data aggregation module. The data aggregation module is configured to receive at an aggregation module of a mobile device a stream of data packets to be transmitted to a remote network entity; select a transmission mode, for sending data packets of the stream of data packets from the mobile device to a femtocell associated with the mobile device, the selecting comprising determining whether to transmit the data packets from the stream of data packets to the femtocell using a first transmission mode comprising transmitting the data packets from the stream via a Long Term Evolution (LTE) interface of the mobile device, to transmit the data packets to a wireless transceiver external to the femtocell for routing to the femtocell using a second transmission mode comprising transmitting the data packets from the stream via a WiFi interface of the mobile device, or to transmit the data packets from the data stream using a third transmission mode comprising transmitting a first portion of the data packets to the femtocell via the LTE interface and transmitting a second portion of the data packets to the wireless transceiver via a WiFi interface for routing to the femtocell; and send the data packets according to the selected transmission mode.

Implementations of such an apparatus may include one or more of the following features. The data aggregation module being configured to select the transmission mode is further configured to select the transmission mode based at least in part on link conditions of an LTE link between the femtocell and the mobile device. The data aggregation module being configured to select the transmission mode is further configured to select the transmission mode based at least in part on link conditions of a WiFi link between the wireless transceiver and the mobile device. The data aggregation module being configured to select the transmission mode is further configured to select the transmission mode based at least in part on loading of an LTE link between the femtocell and the mobile device. The data aggregation module being configured to select the transmission mode is further configured to select the transmission mode based at least in part on loading of a WiFi link between the wireless transceiver and the mobile device. The data aggregation module being configured to send the data packets according to the selected transmission mode is further configured to encapsulate packets transmitted from the mobile device to the femtocell. The data aggregation module is further configured to send a signal to the femtocell indicating a start of an aggregate data session in response to the third transmission mode being selected. The data aggregation module is further configured to send a signal to the femtocell indicating an end of the aggregate data session after sending the data packets according to the third transmission mode. The wireless transceiver is a wireless transceiver of a wireless router. The data aggregation module is further configured to select the second transmission mode for LTE user plane data, and select the first transmission mode for LTE control plane data. The data aggregation module is further configured to send an aggregation discovery message to the femtocell; receive an aggregation discovery response from the femtocell, transmit first aggregation information to the femtocell, receive second aggregation information from the femtocell, and configure an aggregation layer of the mobile device based on the first aggregation information and the second aggregation information. The first aggregation information comprises aggregation policy information. The data aggregation module is further configured to test WiFi connectivity with the femtocell.

An example method for aggregating wireless communications traffic in a femtocell according to the disclosure includes receiving, at the femtocell, a first portion of data packets from a data stream from a mobile device via a wireless transceiver external to the femtocell; receiving, at the femtocell, a second portion of data packets from the data stream from the mobile device via a wireless connection with the mobile device; aggregating the first portion of the data packets and the second portion of the data packets to reassemble the data stream at the femtocell to create an aggregated data stream, and sending the aggregated data stream to a destination network entity which is an intended recipient of the first set of data packets and the second set of data packets.

Implementations of such a method may include one or more of the following features. Receiving a signal from the mobile device indicating a start of an aggregate data session prior to receiving the first portion of the data packet and the second portion of the data packets. Receiving a signal from the mobile device indicating an end of the aggregate data session after receiving the first portion of the data packet and the second portion of the data packets. The wireless transceiver is a wireless transceiver of a wireless router connected to the femtocell.

An example apparatus for aggregating wireless communications traffic in a femtocell according to the disclosure includes means for receiving, at the femtocell, a first portion of data packets from a data stream from a mobile device via a wireless transceiver external to the femtocell; means for receiving, at the femtocell, a second portion of data packets from the data stream from the mobile via a wireless connection with the mobile device; means for aggregating the first portion of the data packets and the second portion of the data packets to reassemble the data stream at the mobile device at the femtocell to create an aggregated data stream, and means for sending the aggregated data stream to a destination network entity which is an intended recipient of the first set of data packets and the second set of data packets.

Implementations of such an apparatus may include one or more of the following features. Means for receiving a signal from the mobile device indicating a start of an aggregate data session prior to receiving the first portion of the data packet and the second portion of the data packets. Means for receiving a signal from the mobile device indicating an end of the aggregate data session after receiving the first portion of the data packet and the second portion of the data packets. The wireless transceiver is a wireless transceiver of a wireless router connected to the femtocell.

An example tangible computer-readable medium, having stored thereon computer-readable instructions for aggregating wireless communications traffic in a femtocell, according to the disclosure includes instructions configured to cause a computer to: receive, at the femtocell, a first portion of data packets from a data stream from a mobile device via a wireless transceiver external to the femtocell; receive, at the femtocell, a second portion of data packets from the data stream from the mobile via a wireless connection with the mobile device; aggregate the first portion of the data packets and the second portion of the data packets to reassemble the data stream at the mobile device at the femtocell to create an aggregated data stream, and send the aggregated data stream to a destination network entity which is an intended recipient of the first set of data packets and the second set of data packets.

Implementations of such a tangible computer-readable medium may include one or more of the following features. Instructions configured to cause the computer to receive a signal from the mobile device indicating a start of an aggregate data session prior to receiving the first portion of the data packet and the second portion of the data packets. Instructions configured to cause the computer to receive a signal from the mobile device indicating an end of the aggregate data session after receiving the first portion of the data packet and the second portion of the data packets. The wireless transceiver is a wireless transceiver of a wireless router connected to the femtocell.

An example apparatus for aggregating wireless communications traffic in a femtocell according to the disclosure includes a tangible, non-transitory computer-readable memory; a plurality of modules comprising processor executable code stored in the memory; a processor connected to the memory and configured to access the plurality of modules stored in the memory; and a data aggregation module. The data aggregation module is configured to receive, at the femtocell, a first portion of data packets from a data stream from a mobile device via a wireless transceiver external to the femtocell; receive, at the femtocell, a second portion of data packets from the data stream from the mobile via a wireless connection with the mobile device; aggregate the first portion of the data packets and the second portion of the data packets to reassemble the data stream at the mobile device at the femtocell to create an aggregated data stream, and send the aggregated data stream to a destination network entity which is an intended recipient of the first set of data packets and the second set of data packets.

Implementations of such an apparatus may include one or more of the following features. The data aggregation module is further configured to receive a signal from the mobile device indicating a start of an aggregate data session prior to receiving the first portion of the data packet and the second portion of the data packets. The data aggregation module is further configured to receive a signal from the mobile device indicating an end of the aggregate data session after receiving the first portion of the data packet and the second portion of the data packets. The wireless transceiver is a wireless transceiver of a wireless router connected to the femtocell.

### BRIEF DESCRIPTION OF THE DRAWINGS

**FIG. 1** is a block diagram of an example network architecture in which techniques disclosed herein can be implemented.
**FIG. 2** is a block diagram of an example of downstream aggregation according to techniques disclosed herein.
**FIG. 3** is a block diagram of an example of upstream aggregation according to techniques disclosed herein.
**FIGs. 4A****,** **4B****,** and **4C** are diagrams of protocol stacks that can be used to implement the various aggregation techniques disclosed herein.
**FIG. 5** is a block diagram of a mobile device that can be used to implement the mobile device illustrated in the preceding figures.
**FIG. 6** is a functional block diagram of the mobile device illustrated in **FIG. 5** that illustrates functional modules of a memory shown in **FIG. 5****.**
**FIG. 7** is a block diagram of a femtocell that can be used to implement the femtocell illustrated in the preceding figures.
**FIG. 8** is a block diagram of data frame formats that can be used for sending uplink data from the mobile device through the femtocell via the WiFi interface of the modem / router.
**FIG. 9** is a block diagram of example data frame formats that can be used for sending uplink data from the mobile device through the femtocell via the WiFi interface of a modem / router using encapsulation.
**FIG. 10** is a flow diagram of a process for aggregating downstream wireless communications traffic in a femtocell.
**FIG. 11** is a flow diagram of an example process for selecting a transmission mode.
**FIG. 12** is a flow diagram of a process for sending downlink data packets to a mobile device 120 that can be used to implement the techniques disclosed herein.
**FIG. 13** is a flow diagram of a process for receiving data packets at a mobile device on downlink from a femtocell where the data packets are transmitted over WiFi and LTE interfaces.
**FIG. 14** is flow diagram of an example process for aggregating upstream traffic at a mobile device.
**FIG. 15** is a flow diagram of process for selecting a transmission mode at the mobile device 120 that can be used to implement the techniques disclosed herein.
**FIG. 16** is a flow diagram of a process for sending uplink data packets to a femtocell.
**FIG. 17** is a flow diagram of a process for receiving data packets at a femtocell on uplinks from a mobile device where the data packets are transmitted over WiFi and LTE interfaces between the femtocell and the mobile device.
**FIG. 18** is a flow diagram of a process for routing packets received at a modem / router from a mobile device to a femtocell.
**FIG. 19** is a functional block diagram of the femtocell illustrated in **FIG. 7** that illustrates functional modules of a memory shown in **FIG. 7****.**
**FIG. 20** is a flow diagram of an example of a mobile device-initiated process for discovery and configuration of aggregation layers that can be used to implement the techniques disclosed herein.
**FIG. 21** is a flow diagram of an example of a mobile device-initiated process for discovery and configuration of aggregation layers that can be used to implement the techniques disclosed herein.
**FIG. 22** is a flow diagram of an example of a femtocell-initiated process for discovery and configuration of aggregation layers that can be used to implement the techniques disclosed herein.
**FIG. 23** is a flow diagram of an example of a femtocell-initiated process for discovery and configuration of aggregation layers that can be used to implement the techniques disclosed herein.

### DETAILED DESCRIPTION

Techniques disclosed herein can be used to aggregate bandwidth of an LTE femtocell with an external WiFi router. These techniques may help overcome deficiencies of a conventional LTE femtocell system. In the examples illustrated herein, a WiFi router is integrated with a modem that is connected to a broadband Internet connection, such as a DSL modem or a cable modem. However, in other implementations, the modem and the WiFi router may be separate entities in communication with a wired or wireless network connection. Techniques described herein can be applied to both uplink and downlink transmissions and are transparent to components of the Evolved Packet Core (EPC) of the LTE network, such as the Mobility Management Entity (MME), Serving Gateway (SGW), Home Subscriber Server (HSS), Packet Data Network Gateway (PGW), and/or other components of the core network architecture. Furthermore, while the example implementations discussed herein are directed to LTE implementations, the techniques described herein can be used with other wireless wide area network (WWAN) systems.

### Example Network Environment

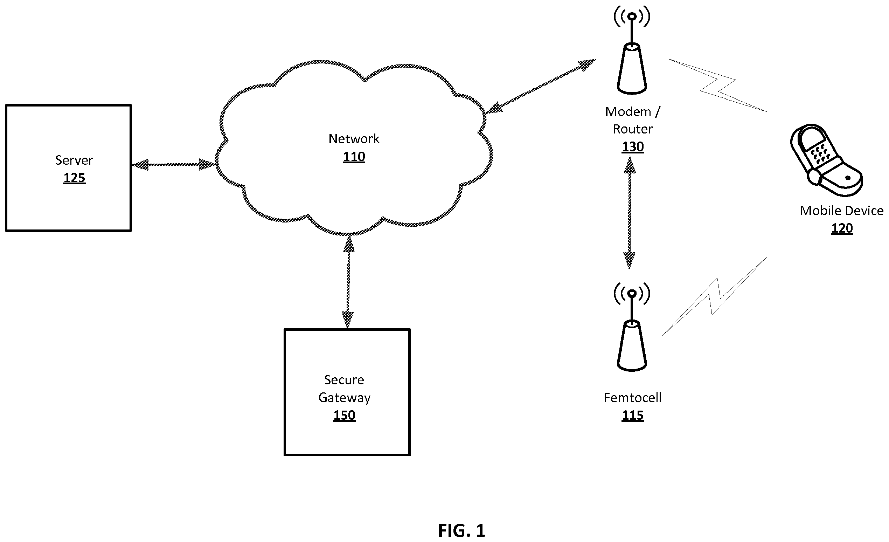

**FIG. 1** is a block diagram of an example network architecture 100, which may be suitable for implementing bandwidth aggregation techniques discussed herein. The network architecture 100 includes a mobile device 120, a modem / router 130, a femtocell 115, a network 110, a remote server 125, and secure gateway 150. The mobile device 120 can be configured to send data to and/or receive data from the remote server 125. The remote server 125 may be an element of the network of the wireless network communications provider associated with the mobile device 120 or may be a third party content provider, such as a provider of web content, application content, or other content that might be accessed by or downloaded to the mobile device 120.

The mobile device 120 may also be referred to as a User Equipment (UE), a mobile station, a terminal, an access terminal, a subscriber unit, a station, etc. The mobile device 120 may be a smartphone, a tablet computer, a laptop computer, or other device that is configured to communicate using both LTE and WiFi wireless communications protocols.

The modem / router 130 has a broadband connection to the network 110 that provides broadband connection that can serve as a backhaul for the femtocell 115. The network 110 may be the Internet and/or a combination of one or more networks. For example, the modem / router 130 may be a DSL modem / router or a cable modem / router, depending upon the type of broadband service being used in that particular implementation.

The modem / router 130 can be configured to provide wired and/or wireless network connectivity for the femtocell 115 to the network 110 via the broadband connection. The modem / router 130 can include a wired interface that allows the femtocell 115 to communicate with the server 125, the secure gateway 150, and/or other networked entities via the network 110. In the example implementations discussed herein, the wired interface comprises an Ethernet interface between the modem / router 130 and the femtocell 115. In other implementations, other types of wired and/or wireless connections may be used.

The modem / router 130 can be configured to serve as a wireless access point that can provide wireless network connectivity to the mobile device 120 and/or other devices using one or more WiFi communications protocols. The term "access point" is used herein generically to refer to a communication device, one example of which is an access point in a wireless local area network such as IEEE 802 series compliant network including the IEEE 802.11 family of standards commonly referred to as WiFi. The modem / router 130 provide the femtocell 115 with access to an wireless transceiver that is external to the femtocell 115 that the femtocell 115 can use to communicate with the mobile device 120.

In the examples illustrated herein, a WiFi router is integrated with a modem that is connected to a broadband Internet connection, such as a DSL modem or a cable modem. However, in other implementations, the modem and the WiFi router may be separate entities in communication with a wired or wireless network connection. Furthermore, other types of devices that provide a wireless transceiver that is external to the femtocell 115 that can be used to provide wireless connectivity between the femtocell 115 and the mobile device 120 may be used.

The femtocell 115 can be configured to provide wireless network connectivity to one or more LTE-enabled wireless devices, such as the mobile device 120. The femtocell 115 can be associated with a mobile communication network provider and can be configured to communicate with the mobile communication network provider's network via the modem / router 130. The coverage area of the femtocell 115 may overlap with that of one or more macrocell base stations and/or other femtocells (not shown) that may create severe and uncoordinated interface that can degrade the channel quality. As a result, the quality of the uplink and/or downlink communications between the femtocell 115 and the mobile device 120 may suffer. However, the femtocell 115 can be configured to improve the quality of the uplink and/or downlink communications by utilizing the WiFi interface of the modem / router 130 for communicating with the mobile device 120.

The femtocell 115 and the mobile device 120 can be configured to include aggregation layers. The aggregation layers of the femtocell 115 and the mobile device 120 can be configured to exchange information with one another including the IP addresses and port numbers associated with their respective devices, aggregation policy information (controlled by the femtocell 115), and signals indicating the beginning and/or the end of an aggregation session. In some implementations, the aggregation layer is implemented on top of an Internet Protocol (IP) layer. The policy information can be used by the aggregation layers of the femtocell 115 and the mobile device 120 to control various aspects of the aggregation techniques disclosed herein. For example, the policy information can specify that LTE user plane traffic should be routed over the WiFi connections between the femtocell 115 and the mobile device 120 and that LTE control plane traffic be routed over the LTE connection between the femtocell 115 and the mobile device 120. The policy information can also be used to control when aggregation may be used. For example, aggregation may be switched off if the backhaul throughput falls below a predetermined threshold, if link conditions of the LTE connection and/or the WiFi connections degrade, and/or loading of the LTE connection and/or the WiFi connections exceed a predetermined threshold.

The secure gateway 150 can be configured to provide a secure communications link between the femtocell 115 and the secure gateway 150. The secure gateway 150 provides for a secure backhaul solution that allows for data to be securely exchanged between the mobile provider's network and the femtocell 115 even though the data may be traversing one or more public networks 110. The femtocell 115 and the secure gateway 150 can be configured to encrypt data to be transmitted across the network 110. The secure gateway 150 can be configured to route data received from the femtocell 115 to one or more intended recipients elsewhere on the network 110, such as the server 125, and may also be configured to route data from the mobile device 120 to another mobile device 120 over one or more public or private network connections.

The example network configuration illustrated in **FIG. 1** is merely an example of one possible configuration of a network in which the techniques disclosed herein may be implemented. Other network configurations may include additional elements not illustrated in **FIG. 1** and the various components may be interconnected in a different configuration than what is shown in **FIG. 1****.** The hardware illustrated in **FIG. 1** can be used to implement the example implementation described.

### Example Hardware

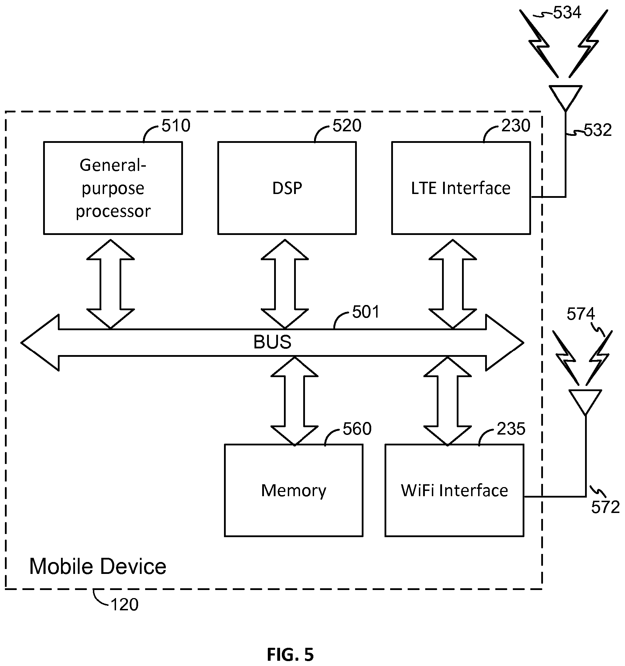

**FIG. 5** is a block diagram of a mobile device that can be used to implement the mobile device 120 illustrated in the preceding figures. The mobile device 120 comprises a computer system including a general-purpose processor 510, a digital signal processor (DSP) 520, an LTE interface 230, a WiFi interface 235, and a non-transitory memory 560, connected to each other by a bus 601. The LTE interface 230 can include a wireless receiver, transmitter, transceiver, and/or other elements that enable the mobile device 120 to send and/or receive data using the LTE wireless communications protocols. The LTE interface 230 is connected by a line 532 to an antenna 534 for sending and receiving communications to/from the femtocell 115 and/or other wireless devices configured to communicate using the LTE wireless communication protocols. The WiFi interface 235 can include a wireless receiver, transmitter, transceiver, and/or other elements that enable the mobile device 120 to send and/or receive data using the WiFi wireless communications protocols. The WiFi interface 235 is connected by a line 572 to an antenna 574 for sending and/or receiving communications to/from the modem / router 130 and/or other wireless devices configured to communicate using the WiFi wireless communication protocols. Mobile device 120 may include one or more transceivers configured to receive and/or send communications using other wireless protocols in addition to or instead of the transceiver illustrated in **FIG. 5****.** While the example mobile device 120 illustrated in **FIG. 5** includes an LTE interface 230 and a WiFi interface 235, other implementations of the mobile device 120 may include additional interfaces that support other types of wireless communications. Furthermore, the examples illustrated herein are not limited to LTE implementations, and the mobile device 120 may include one or more wireless interfaces configured to send and/or receive data on other WWAN systems.

The processor 510 can be an intelligent device, e.g., a personal computer central processing unit (CPU) such as those made by Intel^{®} Corporation or AMD^{®}, a microcontroller, an application specific integrated circuit (ASIC), etc. The memory 560 is a storage device that includes random access memory (RAM) and read-only memory (ROM). The memory 560 stores processor-readable, processor-executable software code containing instructions for controlling the processor 510 to perform functions described herein (although the description may read that the software performs the function(s)). The software can be loaded onto the memory 560 by being downloaded via a network connection, uploaded from a disk, etc. Further, the software may not be directly executable, e.g., requiring compiling before execution.

The software in the memory 560 is configured to enable the processor 510 to perform various actions, including implementing the aggregation techniques described herein.

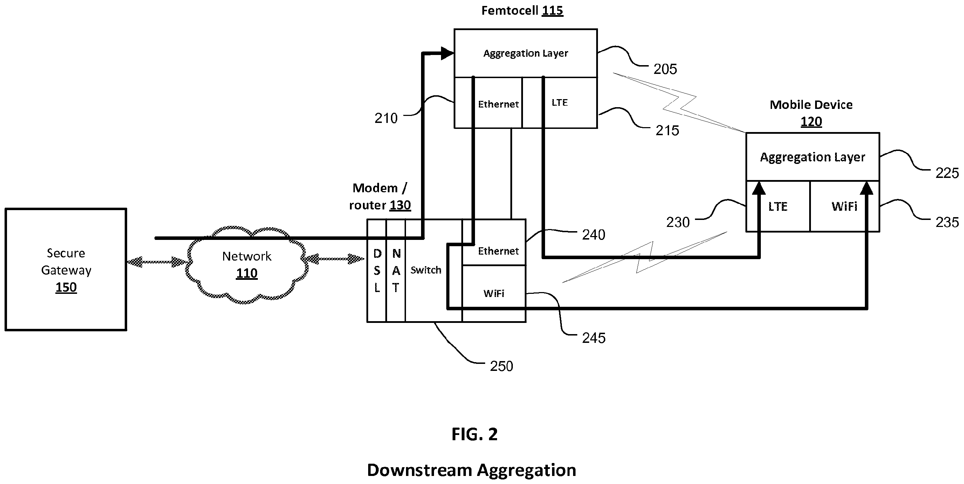

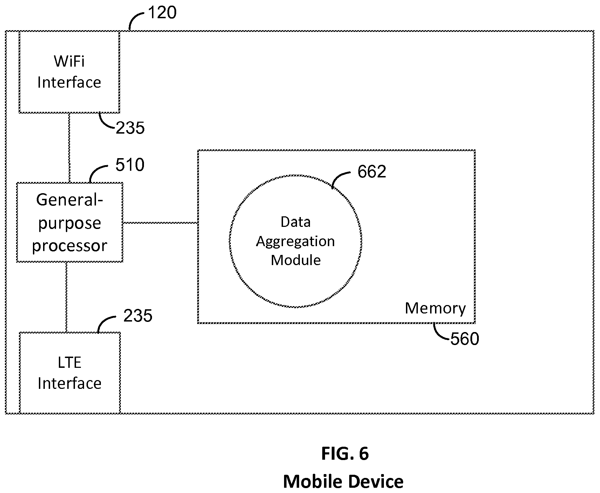

**FIG. 6** is a functional block diagram of the mobile device 120 illustrated in **FIG. 5** that illustrates functional modules of a memory shown in **FIG. 5****.** For example, the mobile device 120 can include a data aggregation module 662. The mobile device 120 may also include one or more additional functional modules that provide other functionality to the mobile device 120. The mobile device 120 illustrated in **FIGs. 5** **and** **6** can be used to implement the mobile devices associated with the processes illustrated in **FIGs. 2-4C****, 10-18, and 20-22.**

The data aggregation module 662 can be configured to perform the aggregation layer functions discussed in the various examples disclosed herein. For example, the data aggregation module 662 can be configured to process signals received from the received from the femtocell 115 that indicate the start and/or the end of a downlink data aggregation session. The data aggregation module 662 can also be configured to send signals to the femtocell 115 indicating the start and/or end of an uplink data aggregation session. The data aggregation module 662 can also be configured to receive multiple downlink data streams from femtocell 115 via the LTE interface 230 and the WiFi transceiver 570 and to aggregate those data streams into an aggregate data stream to recreate an original data that included the packets that were sent by the femtocell 115 over the LTE and WiFi connections. The data aggregation module 662 can also be configured to divide a data stream up into multiple streams of data that can be transmitted using the WiFi transceiver 570 and the LTE interface 230. The data aggregation module 662 can also be configured to exchange information with the data aggregation layer of the femtocell 115. For example, the data aggregation module 662 can be configured to exchange data, such as the MAC addresses and IP address associated with the LTE interface 230 and the WiFi interface 235 of the mobile device with the aggregation layer of the femtocell 115. The data aggregation module 662 can also be configured to receive aggregation policy information from the aggregation layer of the femtocell 115.

The aggregation policy information can include information that the aggregation layer of the femtocell 115 and/or the data aggregation module 662, serving as the aggregation layer of the mobile device 120, can use to select a transmission mode to be used for transmitting data from the femtocell 115 for downlink transmission and from the mobile device 120 for uplink transmissions.

In some implementations, the aggregation policy may indicate that certain types of data streams should be transmitted using a particular transmission mode. For example, some types of data streams may be split into multiple data streams to be transmitted using both WiFi and the LTE connections one or the other type of connection between the sender and the receiver. In an example implementation, the aggregation policy may indicate that User Datagram Protocol (UDP) datagrams should be sent using the LTE interface of the femtocell 115 or the mobile device 120. In an example implementation, the aggregation policy may also indicate that Transmission Control Protocol (TCP) data should be sent using the hybrid mode where a first portion of the data stream is transmitted using the LTE interface and a second portion of the data stream is transmitted using the WiFi interface of the femtocell 115 for downlink transmissions and/or where a first portion of the data stream is transmitted using the LTE interface and a second portion of the data stream is transmitted using the WiFi interface of the mobile device 120 for uplink transmissions.

In some implementations, the aggregation policy information can indicate that a particular transmission mode should be used for data streams that include a particular type of data. For example, the aggregation policy may indicate that data streams carrying voice data should not be split and should instead be transmitted via the WiFi interface or the LTE interface.

In some implementations, the aggregation policy information may include different aggregation policy parameters for different mobile devices 120. For example, the aggregation policy information may indicate that a first mobile device 120 may be use any of the transmission modes associated with the aggregation techniques disclosed herein while a second mobile device 120 may only use a subset of the aggregation techniques disclosed herein. The aggregation policy information may be determined based on quality of service (QoS) information associated with each of the mobile devices or associated with a subscriber plan associated with the mobile devices 120.

In some implementations, the aggregation policy can include one or more threshold values that can be used to determine which transmission mode to select for transmitting uplink and/or downlink data. For example, the aggregation policy information may define a threshold amount of data to be transmitted before a hybrid WiFi / LTE technique may be used to transmit uplink or downlink data. Different threshold values may be associated with uplink and downlink transmissions. Furthermore, different threshold values may be associated with different mobile devices 120 and/or femtocells 115.

In some implementations, the aggregation policy information can specify that LTE user plane traffic should be routed over the WiFi connections between the femtocell 115 and the mobile device 120. The aggregation policy information can also specify that LTE control plane traffic be routed over the LTE connection between the femtocell 115 and the mobile device 120.

In some implementations, the aggregation policy information can also specify that if the backhaul providing network connectivity to the femtocell 115 is limiting data throughput, the aggregation layer of the femtocell and the aggregation layer of the mobile device 120 can be configured to not use the aggregation techniques until throughput improves. The aggregation layer 205 of the femtocell 115 can be configured to monitor uplink and/or downlink speeds provided by the backhaul and can be configured to switch off downlink aggregation if downlink speeds provided by the backhaul degrade below a predetermined threshold and can switch downlink aggregation back on if the downlink speeds provided by the backhaul recover. The aggregation layer 205 of the femtocell 115 can be configured to send an aggregation configuration message to the aggregation layer 225 of the mobile device 120 to notify the mobile device 120 when to stop using the data aggregation techniques or when the mobile device 120 may resume using the data aggregation techniques.

The data aggregation module 662 of the mobile device 120 can also be configured to buffer aggregation data received from the WiFi and the LTE paths between the mobile device 120 and the femtocell 115. The data aggregation module 662 can be configured to implement the de-jitter buffer in the memory 560 of the mobile device 120. The data aggregation module 662 can use the buffer to manage skew between the LTE path and the WiFi path between the mobile device 120 and the femtocell 115 to provide seamless aggregation. The buffering can compensate for latency between the LTE and WiFi paths. The data aggregation module 662 can be configured to buffer the data received to from the LTE interface 230 and/or the WiFi interface 235 to allow for lost and/or delayed packets from the data stream to reach the mobile device 120.

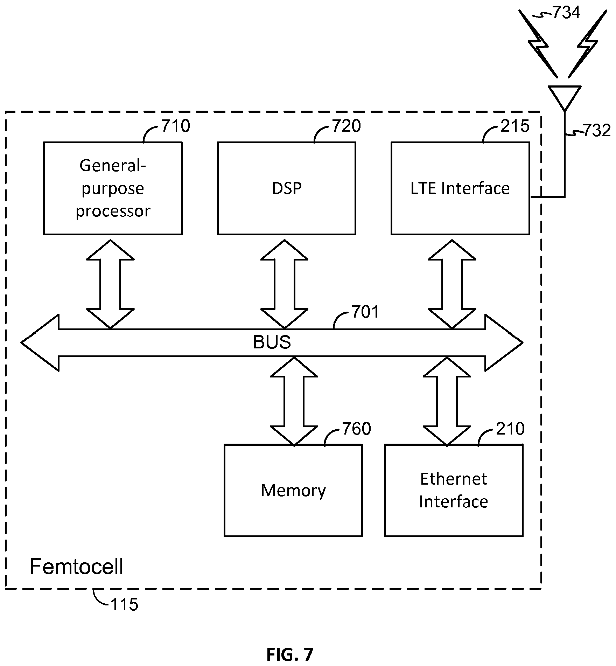

**FIG. 7** is a block diagram of a femtocell that can be used to implement the femtocell 115 illustrated in the preceding figures. The femtocell 115 comprises a computer system including a general-purpose processor 710, a digital signal processor (DSP) 720, an LTE wireless transceiver 730, an Ethernet interface 210, and a non-transitory memory 760, connected to each other by a bus 701. The LTE interface 215 can include a wireless receiver, transmitter, transceiver, and/or other elements that enable the femtocell 115 to send and/or receive data using the LTE wireless communications protocols. The LTE Interface 215 is connected by a line 732 to an antenna 734 for sending and receiving communications to/from the mobile device 120 and/or other wireless devices configured to communicate using the LTE wireless communication protocols. The Ethernet interface 570 provides wired data connectivity to the modem / router 130. While the example illustrated here includes an Ethernet interface between the femtocell 115 and the modem / router 115, other wired and/or wireless data communication techniques and/or protocols can be used to facilitate communications between the femtocell 115 and the modem / router 130. Femtocell 115 may include one or more transceivers configured to receive and/or send communications using other wireless protocols in addition to or instead of the transceiver illustrated in **FIG. 7****.** While the example femtocell 115 illustrated in **FIG. 7** includes an LTE interface 215 and an Ethernet interface 750, other implementations of the femtocell may include additional interfaces that support other types of wireless communications and/or wired communications. Furthermore, the examples illustrated herein are not limited to LTE implementations, and the femtocell 115 may include one or more wireless interfaces configured to be send and/or receive data on other WWAN systems.

The processor 710 can be an intelligent device, e.g., a personal computer central processing unit (CPU) such as those made by Intel^{®} Corporation or AMD^{®}, a microcontroller, an application specific integrated circuit (ASIC), etc. The memory 760 is a storage device that includes random access memory (RAM) and read-only memory (ROM). The memory 760 stores processor-readable, processor-executable software code containing instructions for controlling the processor 710 to perform functions described herein (although the description may read that the software performs the function(s)). The software can be loaded onto the memory 760 by being downloaded via a network connection, uploaded from a disk, etc. Further, the software may not be directly executable, e.g., requiring compiling before execution.

The software in the memory 760 is configured to enable the processor 710 to perform various actions, including implementing the various aggregation techniques described herein.

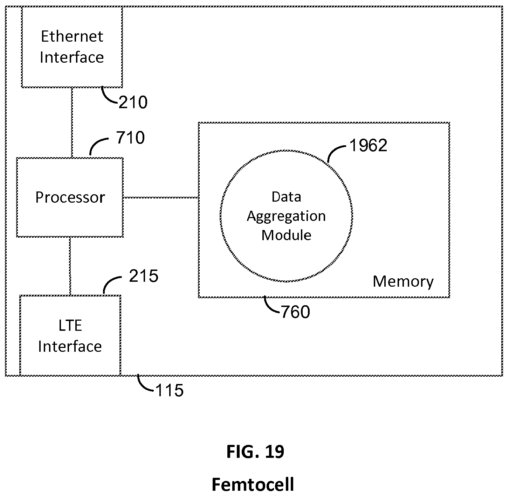

**FIG. 19** is a functional block diagram of the femtocell illustrated in **FIG. 7** that illustrates functional modules of a memory shown in **FIG. 7****.** For example, the femtocell 115 can include a data aggregation module 1962. The femtocell 115 may also include one or more additional functional modules that provide other functionality to the femtocell 115. The femtocell 115 illustrated in **FIGs. 7** **and** **19** can be used to implement the femtocells associated with the processes illustrated in **FIGs. 2-4C****, 10-18,** **and 20-22.**

The data aggregation module 1962 can be configured to perform the aggregation layer functions of the femtocell 115 discussed in the various examples disclosed herein. For example, the data aggregation module 1962 can be configured to process signals received from the received from the mobile device 120 that indicate the start and/or the end of an uplink data aggregation session. The data aggregation module 1962 can also be configured to send signals to the mobile device 120 indicating the start and/or end of a downlink data aggregation session.

The data aggregation module 1962 can also be configured to receive multiple downlink data streams from mobile device 120 (via the LTE Interface 215 and routed to the femtocell 115 from modem / router 130 via the Ethernet interface 210), to aggregate those data streams into an aggregate data stream to recreate an original data that included the packets that were sent by the mobile device 120, and to route the aggregate data stream to an intended recipient. The intended recipient may be a remote network entity, such as server 125 or another mobile device 120. The data aggregation module 1962 can also be configured to divide a downlink data stream to be transmitted to the mobile device 120 into multiple data streams. The data aggregation module 1962 can be configured route a first portion of data packets from the data stream to the mobile device via the modem / router 130, which can transmit the packets to the mobile device 120 using the WiFi interface of the modem router, and to transmit a second portion of the data packets from the data stream to the mobile device 120 using the LTE Interface 215.

The data aggregation module 1962 can also be configured to send aggregation policy information to the mobile device 120. The aggregation policy can be used to determine which transmission modes may be used to send uplink and/or downlink data and can also specify certain conditions where data aggregation may be used and certain conditions where data aggregation may not be used. For example, the aggregation policy information can specify that if the backhaul providing network connectivity to the femtocell 115 is limiting data throughput, the aggregation layer of the femtocell and the aggregation layer of the mobile device 120 can be configured to not use the aggregation techniques until throughput improves. The data aggregation module 1962 of the femtocell 115 can be configured to monitor uplink and/or downlink speeds provided by the backhaul and can be configured to switch off downlink aggregation if downlink speeds provided by the backhaul degrade below a predetermined threshold and can switch downlink aggregation back on if the downlink speeds provided by the backhaul recover. The data aggregation module 1962 can be configured to send an aggregation configuration message to the mobile device 120 via the LTE interface 215 of the femtocell to instruct the aggregation layer 225 of the mobile device to enable or disable data aggregation. In some implementations, the aggregation policy information can specify that LTE user plane traffic should be routed over the WiFi connections between the femtocell 115 and the mobile device 120. The aggregation policy information can also specify that LTE control plane traffic be routed over the LTE connection between the femtocell 115 and the mobile device 120.

The aggregation layer of the femtocell 115 can also be configured to monitor uplink speeds provided by the backhaul and to send a aggregation configuration message to the aggregation layer 225 of the mobile device 120 in the event that uplink speeds fall below a predetermined threshold to instruct the mobile device 120 to turn off the uplink aggregation. The aggregation layer 205 of the femtocell 115 can also be configured to monitor to the uplink speeds provided by the backhaul and to send a signal to the aggregation layer of the mobile device 120 that the aggregation layer 225 of the mobile device 120 can resume using aggregation techniques for uplink transmissions.

The data aggregation module 1962 of the femtocell 115 can also be configured to buffer aggregation data received from the WiFi and the LTE paths between the mobile device 120 and the femtocell 115. The data aggregation module 1962 can be configured to implement the de-jitter buffer in the memory 760 of the femtocell 115. The data aggregation module 1962 can use the buffer to manage skew between the LTE path and the WiFi path between the mobile device 120 and the femtocell 115 to provide seamless aggregation. The buffering can compensate for latency between the LTE and WiFi paths. The data aggregation module 1962 can be configured to buffer the data received to from the LTE interface 215 and/or the Ethernet interface 215 (via WiFi link between the mobile device 120 and the modem / router 130) to allow for lost and/or delayed packets from the data stream to reach the femtocell 115.

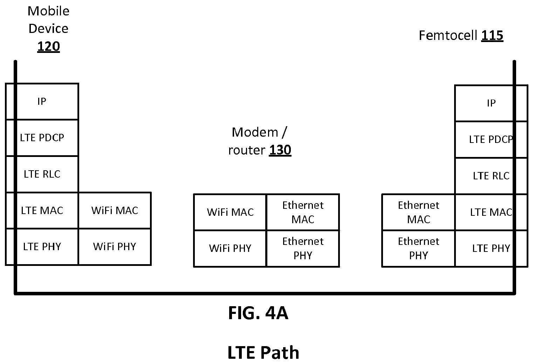

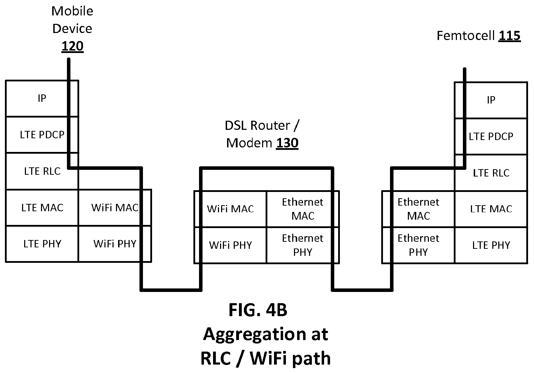

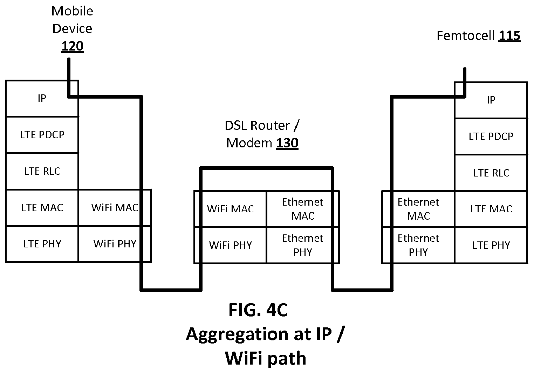

**FIGs. 4A****,** **4B****, and** **4C** are diagrams of protocol stacks that can be used to implement the various aggregation techniques disclosed herein. **FIG. 4A** is a block diagram of a protocol stack that illustrates a path that data can take when transmitted between the LTE interface 230 of the mobile device 120 and the LTE interface 215 of the femtocell 115. The modem / router 130 is not involved in the transfer of the data between the mobile device 120 and the femtocell 115 using the LTE interfaces. **FIGs. 4B** and **4C** illustrate two different possible implementations of the aggregation techniques where at least a portion of the data being transmitted between the mobile device 120 and the femtocell 115 is routed through the modem / router 130.

**FIG. 4B** is a block diagram of a protocol stack that illustrates a path that data can take between the mobile device 120 and the femtocell 115 where the data aggregation techniques disclosed are used to transmit data between the mobile device 120 and the femtocell 115 by routing at least a portion of the data through the modem / router 130. In this example, the aggregation is performed at the LTE Radio Link Control (RLC) sub layer by the aggregation layer 205 of the femtocell 115 and the aggregation layer 225 of the mobile device. In RLC layer aggregation, the WiFi MAC layer addressing can be used that does not involve the IP layer.

The aggregation layer 205 of the femtocell can be configured to perform aggregation on uplink data streams transmitted to the femtocell 115 by the mobile device 120 via the LTE interface 230 and the WiFi interface 235 of the mobile device. In this example embodiment, the aggregation layer 205 of the mobile device 120 is implemented at the RLC layer of the LTE interface 230 of the mobile device 120. The aggregation layer 225 of the mobile device can be configured to split a data stream to be transmitted from the mobile device 120 to the femtocell 115 into a first portion to be transmitted via the WiFi interface 235 to the modem / router 130 and a second portion to be transmitted directly to the femtocell using the LTE interface 230. The portion of the data transmitted using the LTE interface 230 of the mobile device 120 can follow the path illustrated in **FIG. 4A** down through the LTE protocol stack of the mobile device 120 implemented by the LTE interface 235 of the mobile device and back up through the LTE protocol stack at the femtocell 115 implemented by the LTE interface 215 of the mobile device. The portion of the data transmitted using the WiFi interface 235 of the mobile device 120 is received by the WiFi interface 245 of the modem / router 130, and the modem / router 130 routes the data received from the mobile device 120 to the femtocell 115 via the Ethernet interface 240. The femtocell 115 receives the data via the Ethernet interface 210, and the aggregation layer, operating at the RLC layer of the LTE protocol stack of the femtocell 115 aggregates the data received from the mobile device via the WiFi connection with any data received via the LTE connection with the mobile device 120 that is associated with the same data stream.

Similarly, the aggregation layer 225 of the mobile device 120 can be configured to perform aggregation on downlink data streams transmitted to the mobile device 120 by the femtocell 115. The aggregation layer 205 of the femtocell 115 can be configured to split a data stream to be transmitted from the femtocell 115 to the mobile device 120 into a first portion to be routed to the modem / router 130 and transmitted via the WiFi interface 245 of the modem / router 130 and a second portion to be transmitted directly to the femtocell using the LTE interface 215 of the femtocell 115. The portion of the data transmitted using the LTE interface 215 of the femtocell 115 can follow the path illustrated in FIG. 4A down through the LTE protocol stack of the femtocell 115 implemented by the LTE interface 215 of the femtocell 115 and back up through the LTE protocol stack implemented by the LTE interface 230 of the mobile device 120. The portion of the data transmitted routed through the modem / router 130 is transmitted to the mobile device via the WiFi interface 245 of the modem / router 130. The mobile device 120 receives the data via the WiFi interface 235, and the aggregation layer, operating at the RLC layer of the LTE protocol stack of the mobile device 120 aggregates the data received via the WiFi connection with any data received via the LTE connection that is associated with the same data stream.

**FIG. 4C** is a block diagram of a protocol stack that illustrates another path that data can take between the mobile device 120 and the femtocell 115 where the data aggregation techniques disclosed are used to transmit data between the mobile device 120 and the femtocell 115 by routing at least a portion of the data through the modem / router 130. In the example illustrated in **FIG. 4C****,** the aggregation is performed at the Internet Protocol (IP) sub layer by the aggregation layer 205 of the femtocell 115 and the aggregation layer 225 of the mobile device, rather than in the RLC sub layer of the example illustrated in **FIG. 4B****.** In IP layer aggregation. IP encapsulation (IP over IP) or WiFi MAC layer addressing (without involving the IP layer) can be used to implement the aggregation techniques disclosed herein.

### Example Implementations

The following examples illustrate how aggregation of LTE and WiFi bandwidth can be achieved. These example implementations can be implemented using femtocell 115, the mobile device 120, and the modem/router illustrated in **FIG. 1****.** Downstream bandwidth aggregation can be performed for streams of data being sent to the mobile device 120 and upstream bandwidth aggregation can be performed for streams of data being sent from the mobile device 120. The data streams may include multiple data transactions and may be intended for more than one destination. For example, downstream content might include multiples streams of audio and/or video content, email, web page content, application content, and/or other information being transmitted to the mobile device 120.

**FIG. 2** is a block diagram of an example of downlink bandwidth aggregation implemented in the communication system illustrated in **FIG. 1****.** Downstream aggregation can be performed where a stream of data packets intended for the mobile device 120 is received at the modem / router 130. The modem / router 130 can be configured to route the stream of data packets to the femtocell 115. The femtocell can be configured to receive the stream of data packets from the modem / router 130 via an Ethernet interface 210 and to determine a transmission mode to use when transmitting the data stream to the mobile device 120. In a first transmission mode, the femtocell 115 can transmit the data packets from the stream of data packets to the mobile device 120 using an LTE interface 215 of the femtocell 115. In a second transmission mode, the femtocell 115 can route the packets from the data stream to the mobile device through the WiFi interface of the modem / router 130. In a third transmission mode, the femtocell 115 can transmit a first portion of the packets of the data stream to the mobile device 120 and to route a second portion of the packets of the data stream to the modem / router 130 for transmission to the mobile device 120 via the WiFi interface of the modem / router 130.

The aggregation layer 205 can be configured to determine which transmission mode to use to route the data from the femtocell 115 to the mobile device. If the first transmission mode is selected, the aggregation layer 205 can be configured to route the packets of the data stream to the LTE interface 215 of the femtocell 115. The LTE interface 215 can then transmit the packets from the data stream to the mobile device 120. The user device 120 can receive the packets transmitted by the LTE interface 215 of the femtocell 115 via the LTE interface 230, and the LTE interface 230 can be configured to pass the received packets of the data stream to the aggregation layer 225, and the aggregation layer 225 can provide the packets of the data stream to one or more consumers of the data stream on the mobile device 120, such as an audio and/or video player application, a navigation application, and/or other application configured to consume a data stream of the type received.

If the second transmission mode is selected, the aggregation layer 205 of the femtocell 115 can be configured to route the packets of the data stream through the modem / router 130 to be transmitted to the mobile device 120 via the WiFi interface 245 of the modem / router 130. The aggregation layer 205 can be configured route the packets from the data stream to the modem / router 130 through a wired or wireless connection between the femtocell 115 and the modem / router 130 and may also route the packets from the data stream through one or more intermediate devices, such as a hub or switch. In the example illustrated in **FIG. 2****,** the femtocell 115 includes an Ethernet interface 210 which is connected either directly or indirectly to the Ethernet interface 240 of the modem / router 130. While this example implementation uses Ethernet interfaces to enable the femtocell 115 to communicate with the modem / router 130, other implementations can use other data communication or networking protocols to enable the femtocell 115 and the model / router 130 to communicate. The Ethernet interface 240 of the modem / router 240 can be configured to provide the received packets to switch 245, and switch 245 can in turn route the data packets to the WiFi interface 245 for transmission to the mobile device 120. The data packets of the data stream can be received by the WiFi interface 235 of the mobile device 120. The WiFi interface 235 can be configured to pass the received packets of the data stream to the aggregation layer 225, and the aggregation layer 225 can provide the packets of the data stream to one or more consumers of the data stream on the mobile device 120.

If the third transmission mode is selected, the aggregation layer 205 of the femtocell can be configured to transmit a first portion of the data packets from the data stream to the mobile device 120 via the LTE interface 215 and to route a second portion of the data packets from the data stream to the mobile device via the WiFi interface of the modem / router 130. The aggregation layer 205 can be configured to route the first portion of packets of the data stream to the LTE interface 215 of the femtocell 115. The LTE interface 215 can then transmit the first portion of the packets from the data stream to the mobile device 120. The user device 120 can receive the packets transmitted by the LTE interface 215 of the femtocell 115 via the LTE interface 230, and the LTE interface 230 can be configured to pass the received packets of the data stream to the aggregation layer 225. The aggregation layer 205 of the femtocell 115 can be configured route the second portion of packets from the data stream to the modem / router 130 through a wired or wireless connection between the femtocell 115 and the modem / router 130 and may also route the packets from the data stream through one or more intermediate devices, such as a hub or switch. The Ethernet interface 240 of the modem / router 240 can be configured to provide the received packets to switch 245, and switch 245 can in turn route the data packets to the WiFi interface 245 for transmission to the mobile device 120. The data packets of the data stream can be received by the WiFi interface 235 of the mobile device 120 and provided to the aggregation layer 225 of the mobile device 120. The aggregation layer 225 of the mobile device 120 can be configured to reassemble the data stream from the first portion of data packets and the second portion of data packets received via the LTE interface 230 and the WiFi interface 235, respectively.

The first portion of packets and the second portion of packets may or may not be concurrent packets within the data stream and/or may be interleaved sets of packets. Furthermore, since the packets are being transmitted to the mobile device 120 using two different interfaces, the packets may be received out of order. The aggregation layer 225 of the mobile device 120 can be configured to receive the first and second portions of the data packets and to reorder / aggregate the packets back into a single coherent data stream. The aggregation layer 225 of the mobile device can be configured to include a de-jitter buffer that manages skew between the LTE path and the WiFi path between the mobile device 120 and the femtocell 115 to provide seamless aggregation. The buffering by the aggregation layer 225 can compensate for latency between the LTE and WiFi paths. The aggregation layer 225 can be configured to buffer the data received to from the LTE interface 230 and/or the WiFi interface 235 to allow for lost and/or delayed packets from the data stream to reach the mobile device 120.

An aggregation layer 205 of the femtocell 115 can be configured to select which transmission mode to use based on channel conditions and/or other considerations. For example, if the LTE interface 215 is experiencing interference from a macrocell and/or one or more nearby femtocells or the LTE downlink channels are already being utilized, the aggregation layer 205 of the femtocell 115 can select the second transmission mode. The aggregation layer 205 can select the first transmission mode if the channel conditions for downlink channel are good and/or the WiFi interface is already being utilized to transmit data. The aggregation layer 205 of the femtocell 115 can select the third transmission mode where the channel quality is good for both WiFi and LTE transmissions.

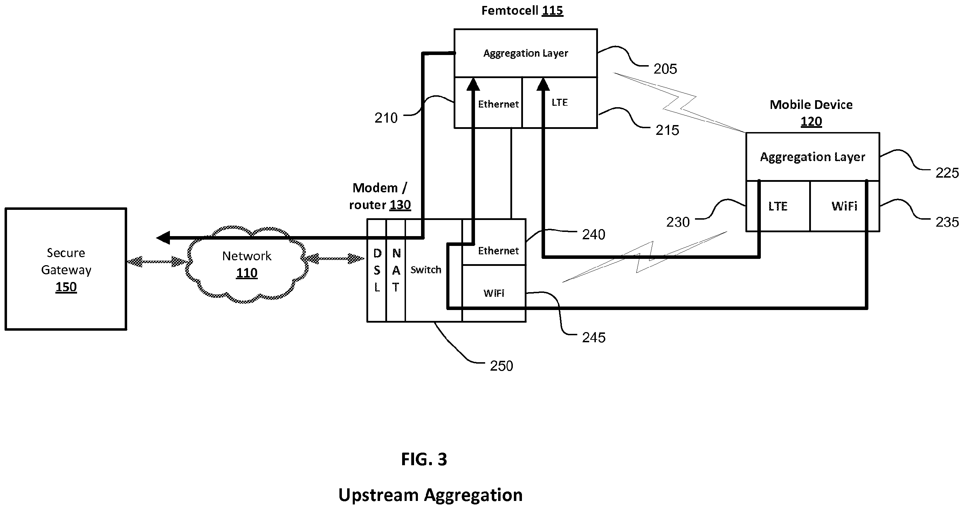

**FIG. 3** is a block diagram of an example of upstream bandwidth aggregation that can be implemented using the communication system illustrated in **FIG. 1****.** Upstream aggregation can be performed on data being transmitted from the mobile device 120.

In the example illustrated in **FIG. 3****,** the aggregation layer 225 of the mobile device 120 can be configured to split a data stream into multiple data streams that can be transmitted using the WiFi interface 235 and the LTE interface 230 of the mobile device 120. The multiple data streams can then be routed to the femtocell 115, which can be configured to aggregate the multiple data streams back into a single data stream for transmission to secure gateway 150, which may in turn route the single data stream to an intended destination of the data stream, such as server 125.

The aggregation layer 225 of the mobile device 120 can be configured to provide a first portion of data packets from the data stream to the LTE interface 230 and a second portion of data packets from the data stream to the WiFi interface 235. The modem / router 130 can be configured to receive the data packets transmitted by the WiFi interface 235 of the mobile device 120 and to route the received packets to the switch 245. The switch 245 can then route the received packets to the Ethernet interface 240, and the Ethernet interface 240 can send the packets to the femtocell 115. The Ethernet interface 210 of the femtocell 115 can receive the packets from the modem / router 130 and provide the received packets to the aggregation layer 205 of the femtocell 115.

The LTE interface 215 of the femtocell 115 can receive the packets transmitted by the LTE interface 230 of the mobile device 115 and provide the received packets to the aggregation layer 205 of the femtocell 115. The aggregation layer 115 of the femtocell can be configured to aggregate the data packets received from the mobile device 120 and to send the aggregated data stream to the secure gateway 150, which may in turn route the single data stream to an intended destination of the data stream, such as server 125 (or another destination identified in the data packets of the first and second data streams).

The aggregation layer 225 of the mobile device can be configured select whether to transmit data using the LTE interface 230 and/or the WiFi interface 235 based on the channel conditions and/or on the channel usage. For example, the aggregation layer 225 can be configured to transmit data using primarily the WiFi interface 235 if a macrocell or other femtocell is causing interference that affects channel quality for LTE transmission. The aggregation layer 225 can be configured to transmit data using primarily the LTE interface 230 if there is interference on the WiFi channel and be configured to transmit data using primarily the WiFi interface 235 if there is interference on the LTE channel. The aggregation layer 225 of the mobile device 120 can also be configured to take into account other factors, such as a quality of service (QoS) requirements associated with the data to be transmitted and/or the mobile device 120, QoS requirements associated with other data to be transmitted to the mobile device and/or or QoS requirements associated with another mobile device that is connected to the femtocell 115 and/or the modem / router 130.

The aggregation layer 205 of the femtocell 115 can be configured to include a de-jitter buffer that manages skew between the LTE path and the WiFi path between the mobile device 120 and the femtocell 115 to provide seamless aggregation. The buffering by the aggregation layer 205 can compensate for latency between the LTE and WiFi paths. The aggregation layer 205 can be configured to buffer the data received to from the LTE interface 215 and/or the Ethernet interface 215 (through which data traveling along the WiFi path to the femtocell 115 would be routed to the femtocell 115 from the modem / router 130) to allow for lost and/or delayed packets from the data stream to reach the femtocell 115.

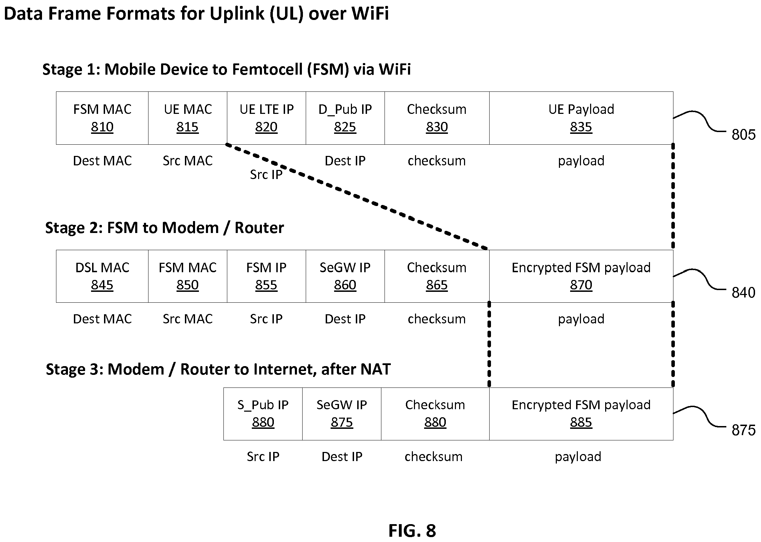

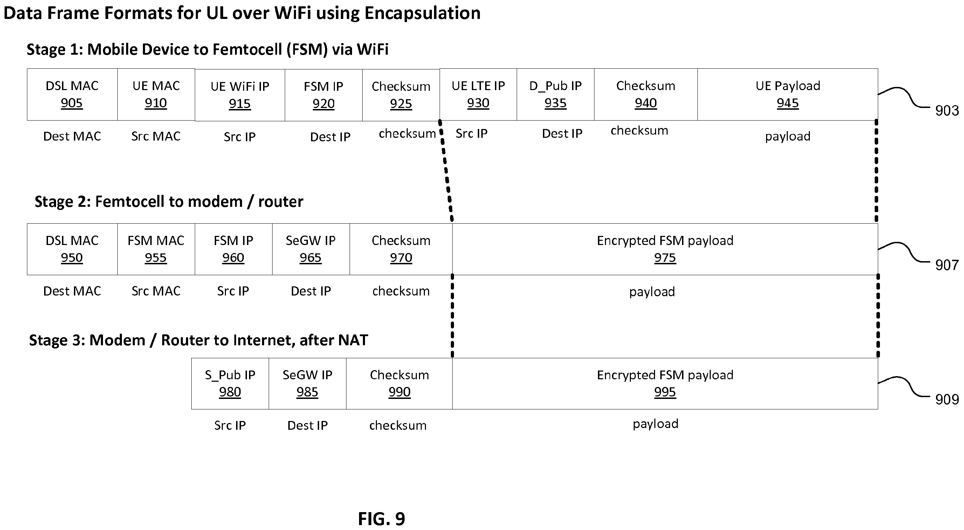

**FIG. 8** is a block diagram of example data frame formats that can be used for sending uplink data from the mobile device 120 through the femtocell 115 via the WiFi interface 245 of the modem / router 130. The example illustrated in **FIG. 8** the modem / router 130 is configured to support bridge functionality. Similar techniques can be used by the aggregation layers of the mobile device 120 and the femtocell 115 for sending downlink data from the femtocell 115 to the mobile device 120 in implementations where the modem / router is configured to support bridging. In implementations where the modem / router 130 is not configured to support bridging, the aggregation layers of the mobile device 120 and the femtocell 115 can be configured to use the encapsulation technique illustrates in **FIG. 9** to implement the aggregation techniques disclosed herein.

In the example frame format illustrated in **FIG. 8****,** frame 805 provides an example of a frame format that can be used when sending data from the mobile device 120 via the WiFi interface 235 of the mobile device 120. The destination MAC address field 810 for the frame is set to the MAC address of the femtocell 115, and the source MAC address field 815 is set to the MAC address of the mobile device 120. The source IP address field 820 is set to the IP address associated with the LTE interface 230 of the mobile device 120. While the example illustrated in **FIG. 8** can be used with the IEEE 802.3 frame format, the techniques discussed herein can be implemented using other frame formats, such as the IEEE 802.11 frame format and/or other frame formats. The example frame format can be used with the examples illustrated in FIGS. 4B and 4C where aggregation is implemented in either at the RLC layer or at the IP layer.

The LTE interface 230 of the mobile device 120 can be associated with a first IP address and the WiFi interface 235 can be associated with a second IP address. The first IP address associated with the LTE interface 230 is associated with the wireless communication provider. In some implementations, the first IP address may be a public IP address that is part of a publicly addressable address space associated with the wireless communications provider, while in other implementations, the first IP address may be a private IP address associated with the wireless communication provider. The second IP address associated with the WiFi interface 235 may be a private IP address that is assigned to the WiFi interface 235 by the modem / router 130 and is part of a private IP address space associated with the single public IP address associated with the router / modem 130. When routing uplink traffic through the WiFi interface 235 of the mobile device 120 to the femtocell 115, the source IP address field 820 is set to the IP address associated with the LTE interface 820 and the IP address associated with the LTE interface 820 will not be translated by the NAT module of the modem / router 130 to the public IP address of the modem / router 130 since the IP address associated with the LTE interface 820 is not part of the private address maintained by the modem / router 130. The destination IP address field 825 is set to the IP address of the destination of the packet. For example, the destination IP address field 825 would be set to a public IP address associated with the server 125 if the intended destination of the packet is server 125. The checksum field 830 is set to a checksum value based on the data in the other fields of the frame 805 and can be used by the receiver to determine whether the frame 805 has been corrupted in transit. The payload field 835 includes data to be transmitted to the intended destination of the frame 805.

The frame 840 is an example of a frame that can be transmitted from the femtocell 115 to the modem / router 130 in response to the femtocell 115 receiving the data frame 805. The destination MAC field of the frame 840 is set to the MAC address of the modem / router 130 and the source MAC address field 845 is set to the MAC address of the femtocell 115. The source IP address field 855 is set to the IP address of the femtocell 115 and the destination IP address is set to the IP address associated with a secure gateway server 150. The secure gateway server is a server associated with the mobile network provider with which the femtocell 115 is associated. The secure gateway server is configured to receive traffic routed to it by the femtocell 115 and to route the received traffic to the appropriate final destination. For example, the secure gateway server can route frame 805 to the final destination indicated in the destination IP address field 825. The checksum field 865 is set to a checksum value based on the data in the other fields of the frame 840 and can be used by the receiver to determine whether the frame 840 has been corrupted in transit. The payload of packets exchanged between the femtocell 115 and the secure gateway are encrypted, and the payload field 870 can be set to include part of the contents of frame 805 in an encrypted form. In the example illustrated in **FIG. 8****,** the contents of the source IP field 820, the destination IP address field 825, the checksum field 830, and the payload field 835 can be encrypted and transmitted in the payload field 870 of the frame 840. The frame 840 can be sent from the femtocell 115 to the modem / router 130 via the Ethernet interface 210 of the femtocell 115 to the Ethernet interface 240 of the modem / router 130.

The frame 875 is an example of a frame that can be transmitted by the modem / router 130 to the secure gateway server over the Internet in response to receiving the frame 840 from the femtocell 115. The source IP address filed 880 of the frame 875 can be set to the public IP address of the modem / router 130 and the destination IP address field 875 can be set to the IP address of the secure gateway server. The checksum 880 can be set to a checksum value based on the data in the other fields of the frame 875 and can be used by the receiver to determine whether the frame 875 has been corrupted in transit. The payload field 885 can be set to include the encrypted contents of the payload field 870 from frame 840.

**FIG. 9** is a block diagram of example data frame formats that can be used for sending uplink data from the mobile device 120 through the femtocell 115 via the WiFi interface 245 of the modem / router 130 using IP packet encapsulation. The example illustrated in **FIG. 9** the modem / router 130 is not configured to support bridge functionality. Similar techniques can be used by the aggregation layers of the mobile device 120 and the femtocell 115 for sending downlink data from the femtocell 115 to the mobile device 120 in implementations where the modem / router is not configured to support bridging.

The diagram of **FIG. 9** is illustrated in three stages. In the first stage, frame 903 is transmitted from the mobile device 120 to the modem / router 130 via the WiFi interface 235 of the mobile device 120 and the modem / router 130 routes the data frame to the femtocell 115. In the second stage, the femtocell 115 generates the packet 907, which includes encapsulates and encrypts data from the frame 903 in the payload field 975 of frame 907, and routes the frame 907 to the modem / router 130. In the third stage, the modem / router 130 receives the frame 907 from the femtocell 115 and generates the frame 909, which includes the encrypted payload from the frame 907 in the payload field 995 of frame 909, and the modem / router 130 sends the frame 909 over the network 110 to the secure gateway 150.

Frame 903 provides an example of a frame format that can be used when sending data from the mobile device 120 to the femtocell 115 via the WiFi interface 235 of the mobile device 120 in stage 1 of the uplink process. The destination MAC address field 905 for the frame is set to the MAC address of the modem / router 130, and the source MAC address field 910 is set to the MAC address of the mobile device 120. The source IP address field 915 is set to the IP address associated with the WiFi interface 235 of the mobile device 120 (in contrast with the example illustrated in **FIG. 8****,** where the source IP address field of the frame 805 is set to the IP address associated with the LTE interface 230 of the mobile device 120), and the destination IP address 920 is set to the IP address of the femtocell 115. The checksum field 925 is set to a checksum value based on the data in the other fields of the frame 903 and can be used by the receiver to determine whether the frame 903 has been corrupted in transit. The frame 903 includes a second source IP address field 930 that is set to the IP address associated with the LTE interface 230 of the mobile device 120. The IP address associated with the LTE interface 230 of the mobile device may be a public IP address and can be used by a remote network entity not on the local network to route data back to the mobile device 120. The second destination IP address field 935 includes a public IP address associated with an intended recipient the frame 903. For example, if the intended recipient of the data included in frame 903 is the server 125, the public IP address of the server 125 would be included in the second destination IP address field 935. A second checksum field 940 is provided that can be used by the intended recipient (and any intermediate recipients of the field) to determine whether the data included in the payload 945 has been corrupted in transit. The payload field 945 includes data to be transmitted to the intended recipient of the frame 903.

Frame 907 provides an example of frame format that can be used when sending a frame from the femtocell 115 to the modem / router 130 in stage 2 of the uplink process. The destination MAC address field 950 can be set to the MAC address of the modem / router 130 and the source MAC address field 955 can be set to the MAC address of the femtocell. The source IP address field 960 can be set to the IP address of the femtocell 115 and the destination IP address field 965 can be set to the IP address of the secure gateway 150. The checksum field 970 is set to a checksum value based on the data in the other fields of the frame 907 and can be used by the receiver to determine whether the frame 907 has been corrupted in transit. The femtocell 115 can also be configured to generate an encrypted payload field 975 for the frame 907. The femtocell is configured to communicate using encrypted communications to provide secure communications with the secure gateway 150. The femtocell 115 can be configured to encrypt the values from the second source IP address field 930, the second destination IP address field 935, the checksum 940, and the payload 945 from the frame 903 that the femtocell 115 receives from the mobile device 120 via the modem / router 130.

The modem / router 130 can be configured to receive the frame 907 and to generate the frame 909 in response to receiving the frame 909 from the femtocell 115. The frame 909 includes a source IP address field 980 which is set to the public IP address associated with the modem / router 130. The destination IP address field 985 is set to the public IP address of the secure gateway 150. The payload field 995 of the frame 909 is the contents of the payload field 975 of the frame 975, which comprises the encrypted data generated by the femtocell 115 to be sent to the secure gateway 150. The secure gateway 150, in response to receiving the frame 909, will decrypt the contents of the payload and send the original contents of the payload field 945 from frame 903 to the intended recipient over the network 110. While the example illustrated in **FIG. 9** can be used with the IEE 802.3 frame format, the techniques discussed herein can be implemented using other frame formats.

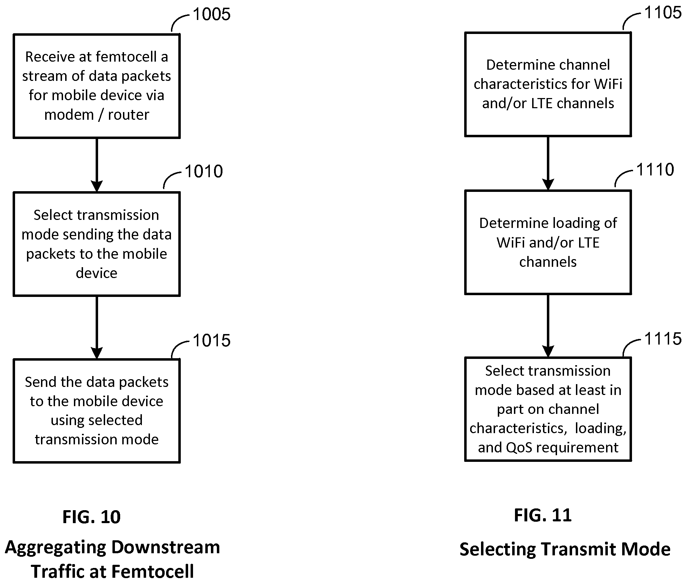

**FIG. 10** is a flow diagram of an example process for aggregating downstream wireless communications traffic in a femtocell. The process illustrated in **FIG. 10** can be implemented in femtocell 115.

The process can begin with the femtocell 115 receiving a stream to data packets to be transmitted to the mobile device 120 (stage 1005). The stream of data packets may be received from server 125, another mobile device, or another network-connected entity. The modem / router 130 can receive the stream of data packets from the source network-connected entity via the network 110 and route the stream of data packets to the femtocell 115. The stream of data packets may have been received from the secure gateway 150 or from another network-connected entity, such as the server 125. Furthermore, a destination address of the data packets may use the IP address associated with the LTE interface 230 of the mobile device 120, since the IP address associated with the WiFi interface 235 of the mobile device 120 will typically be a private IP address associated with a local network connection used for WiFi communications between the modem / router 130 and the mobile device 120.

A transmission mode can then be selected for sending the data packets of the data stream from the femtocell 115 to the mobile device 120 (stage 1010). The aggregation layer 205 of the femtocell can be configured to select a transmission mode to use for transmitting the data packets of the data stream to the mobile device 120. For example, in the example implementation illustrated in **FIG. 2****,** the mobile device 120 includes both an LTE interface 230 and a WiFi interface 235. The aggregation layer 205 of the femtocell 115 can be configured to determine whether to transmit the data packets from the stream of data packets to the mobile device via a LTE interface of the femtocell 215, to route the data packets to the modem / router 130 for transmission to the mobile device via a WiFi interface 245 of the modem / router 130, to transmit a first portion of the data packets to the mobile device 120 via the LTE interface 215 of the femtocell 115 and to route a second portion of the data packets to the modem / router 130 for transmission to the mobile device 120 via the WiFi interface 245 of the modem / router 130. An example process for selecting the a transmission mode is illustrated in **FIG. 11** and is discussed in detail below.

The data packets can then be sent according to the selected transmission model (stage 1015). The aggregation layer 205 can be configured to route any packets to be transmitted via the LTE interface 215 of the femtocell 115 to the LTE interface 215 for transmission if all or part of the data packets are to be transmitted to the mobile device 120 via the LTE interface 215. The aggregation layer 205 can also be configured to route any packets to be transmitted via the WiFi interface 245 of the modem / router 130 to the modem / router 130 via the Ethernet interface 210. The modem / router 130 can then transmit the packets received from the femtocell 115 to the mobile device 120 using via the WiFi interface 245.

**FIG. 11** is a flow diagram of an example process for selecting a transmission mode that can be used to implement the techniques disclosed herein. The process illustrated in **FIG. 11** can be used implement stage 1010 of the process illustrated in **FIG. 10****.** The process illustrated in **FIG. 11** can be implemented by the femtocell 115.

The femtocell 115 can be configured to determine channel characteristics of the WiFi and/or the LTE downlink channels (stage 1105). For example, the aggregation layer 205 of the femtocell 115 can be configured to request downlink channel condition information from the mobile device 120. The aggregation layer 205 of the femtocell 115 can also be configured to periodically receive channel condition information from the mobile device 120 for the LTE downlink channels and/or the WiFi downlink channel.

The femtocell 115 can also be configured to determine a data load currently associated with the WiFi and LTE channels (stage 1110). The aggregation layer 205 of the femtocell 115 can be configured to keep track of what data is being routed to the mobile device via the WiFi and LTE channels.

A transmission mode can be selected based at least in part on the channel characteristics and/or the loading of the channels (stage 1115). The aggregation layer 205 of the femtocell can be configured to select which transmission mode to use based on the channel characteristics and/or the loading of the channels

The aggregation layer 205 of the femtocell 115 can also be configured to take into consideration other factors, such as the QoS associated with the mobile device 120, the data stream to be transmitted to the mobile device 120, and/or the QoS associated with other data to be transmitted to mobile device 120 and/or the QoS associated with another mobile device that is connected to the femtocell 115 and/or the modem / router 130.

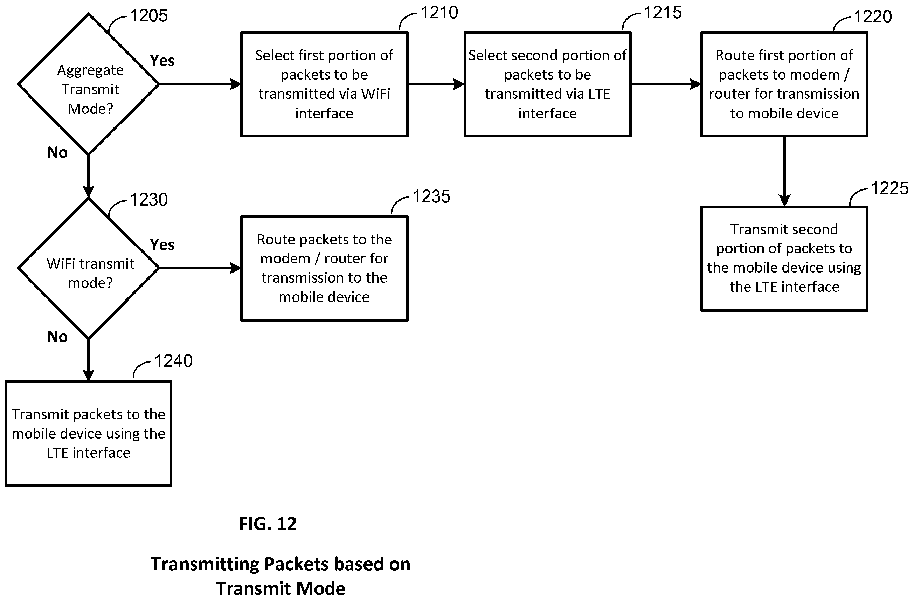

**FIG. 12** is a flow diagram of an example process for sending downlink data packets to a mobile device 120 that can be used to implement the techniques disclosed herein. The process illustrated in **FIG. 12** can be used to implement stage 1015 of the process illustrated in **FIG. 10****.** The process illustrated in **FIG. 12** can be implemented by femtocell 115.

A determination can be made whether the aggregate transmission mode has been selected (stage 1205). The aggregation layer 205 of the femtocell 115 can determine a transmission mode to be used for sending a downlink data stream to the mobile device 120. If the aggregate transmission mode is selected by the aggregation layer 205, the data packets from the downlink data stream can be transmitted to the mobile device 120 over both the LTE and WiFi channels.

If the hybrid / aggregate transmit mode has been selected, a first portion of the packets to be transmitted to the mobile device 120 can be selected to be transmitted to the mobile device 120 via the WiFi interface 245 of the modem / router (stage 1210). A second portion of the packets to be transmitted to the mobile device 120 can be selected to be transmitted to the mobile device 120 via the LTE interface 215 of the femtocell 115 (stage 1215).

The first portion of the data packets can be routed the modem / router 130 to be transmitted to the mobile device 120 via the WiFi interface of the modem / router 130 (stage 1220). The aggregation layer 205 can set the destination IP address of the data packets to the IP address associated with the WiFi interface 235 of the mobile device 120. The aggregation layer 205 can the route the data packets to the modem / router 130 via the Ethernet interface 210.

The second portion of the data packets can be transmitted to the mobile device 120 using the LTE interface 215 of the femtocell 115 (stage 1225). The aggregation layer 205 of the femtocell 115 can be configured to send the second portion of the data packets to the mobile device 120 via the LTE interface 205 of the femtocell 115. The destination IP address of the packets can be set to the IP address associated with the LTE interface 230 of the mobile device 120.

If the hybrid / aggregate transmit mode was not selected, a determination can be made whether the WiFi-only transmit mode has been selected (stage 1230). If the WiFi-only transmit mode has been selected, the aggregation layer 205 of the femtocell 115 can be configured to route the data packets of the data stream to the modem / router 130 for transmission to the mobile device 120 via the WiFi interface 245 of the femtocell 115 (stage 1235). The aggregation layer 205 can set the destination IP address of the data packets to the IP address associated with the WiFi interface 235 of the mobile device 120.

If the neither the hybrid / aggregate transmit mode nor the WiFi-only mode were selected, the aggregation layer 205 of the femtocell 115 can be configured to transmit the data packets from the data stream to the mobile device 120 via the LTE interface 205 of the femtocell 115 (stage 1240). The destination IP address of the packets can be set to the IP address associated with the LTE interface 230 of the mobile device 120.

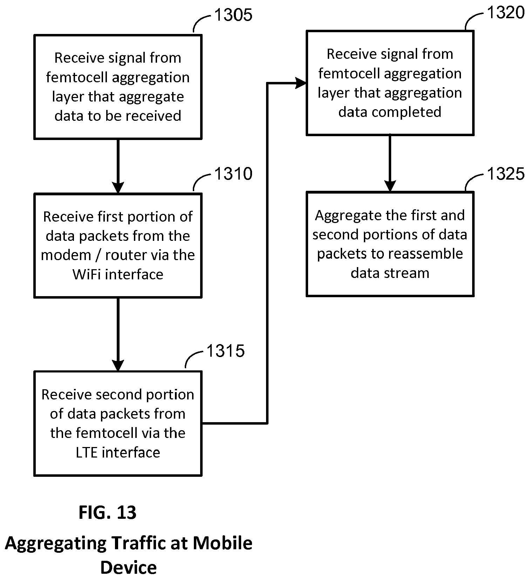

**FIG. 13** is a flow diagram of an example process for receiving data packets at a mobile device 120 on downlink from a femtocell 115 where the data packets are transmitted over WiFi and LTE interfaces that can be used to implement the techniques disclosed herein. The process illustrated in **FIG. 13** can be implemented by the mobile device 120.

The aggregation layer 205 of the femtocell 115 and the aggregation layer 225 of the mobile device can be configured to exchange information via the LTE interface between the femtocell 120 and the mobile device 120 or via the WiFi interface between the mobile device 120 and the modem / router 130. The information exchanged can include MAC address information, IP address information, port information, and other information that the aggregation layers of the two devices can use when routing information according to the various techniques disclosed herein.

The mobile device 120 can optionally receive a signal from the femtocell 115 indicating the start of an aggregate data session between the femtocell 115 and the mobile device 120 (stage 1305). In some implementations, the aggregation layer 205 of the femtocell 115 can be configured to send a signal to the aggregation layer 225 of the mobile device 120 to signal that a data stream is about to be sent to the mobile device via WiFi and LTE connections with the mobile device 120. In some implementations, when the aggregation layer 205 of the femtocell can be configured to block other data packets from being transmitted from the femtocell 115 and the modem / router 130 to the mobile device 120 for the duration of an aggregation session. This blocking may be handled automatically by the mobile device 120 and/or the femtocell 115 in some implementations, and thus the aggregation layer may not need to implement the blocking functionality.

The mobile device 120 can then receive a first set of data packets from femtocell 115 via the LTE interface 230 (stage 1310). The femtocell 115 can be configured to select a first portion of the data packets of the aggregate data stream to be transmitted to the mobile device 120 via the LTE interface 215 of the femtocell 115. The mobile device 115 can be configured to receive these data packets via the LTE interface 230, and the LTE interface 230 can be configured to provide the received data packets to the aggregation layer 225 of the mobile device.

The mobile device 120 can then receive a second set of data packets from the femtocell 115 via the WiFi interface 235 (stage 1315). The femtocell 115 can be configured to select a second portion of the data packets of the aggregate data stream to be transmitted to the mobile device 120 via the WiFi interface 245 of the modem / router 130 and to route the second portion of the data packets of the aggregate data stream to the modem / router 130. The modem / router 130 can then transmit the second portion of the packets to the mobile device 120 via the WiFi interface 245.

The mobile device 120 can then optionally receive a signal from the femtocell 115 indicating the end of the aggregate data session between the femtocell 115 and the mobile device 120 (stage 1320). In some implementations, the aggregation layer 205 of the femtocell 115 can be configured to send a signal to the aggregation layer 225 of the mobile device 120 to signal that the data associated the data stream has been transmitted and that the aggregate data session between the femtocell 115 and the mobile device 120 has ended.

The mobile device 120 can then aggregate the stream of data packets from the first set of data packet and the second set of data packets to reassemble the data stream that had originally been split into the first and second portions transmitted over the WiFi and LTE, connections respectively (stage 1325). The aggregation layer 225 of the mobile device 120 can be configured to aggregate the first and second portions of the data packets received from the femtocell 115 in response to receiving the signal from the femtocell that the aggregate data session has completed. In some implementations, the aggregation layer 225 can be configured to begin reassembling the original data stream from the packets received via the WiFi interface 235 and the LTE interface 230 as the data packets are received. In some implementations, the data packets can include a packet sequence number that indicates the relative position of the packet in the original data stream, and the aggregation layer can use the packet sequence number to determine where the packet belongs in the aggregate data stream. The aggregation layer 205 can be configured to provide the aggregate data stream to a data stream consumer on the mobile device 120. The aggregation layer 205 can be configured buffer at least a portion of the aggregate data stream in a memory of the mobile device 120 before providing the aggregate data stream to the data stream consumer to attempt to provide an uninterrupted data stream to the data stream consumer. The size of the buffer used by the aggregation layer 205 may be dependent on the data rates provided by the WiFi and LTE connection, and a smaller buffer may be required where the WiFi and LTE connections provide a lower data and a larger buffer may be required if the WiFi and/or LTE connections provide a higher data rate. The aggregation layer 205 can be configured to determine the size of the buffer based at least in part on the channel conditions over the LTE and WiFi connections.

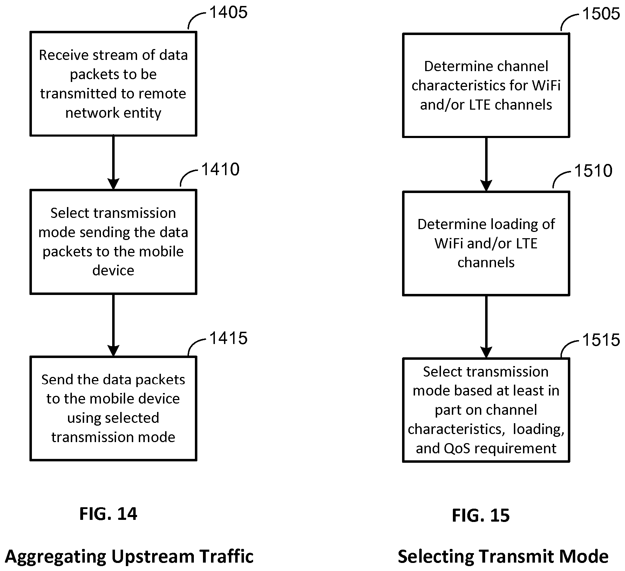

**FIG. 14** is a flow diagram of an example process for aggregating upstream traffic at a mobile device that can be used to implement the techniques disclosed herein. The process illustrated in FIG. 14 can be implemented by the mobile device 120.

A stream of data packets can be received by the mobile device 120 for transmission to a remote network entity (stage 1405). For example, the aggregation layer 225 of the mobile device 120 can be configured to receive a stream of data packets from an application running on the mobile device 120. The data steam may be intended for a remote network-enable entity, such as server 125 or another mobile device 120.

A transmission mode for sending the data packets from the mobile device 120 can be selected (stage 1410). The aggregation layer 225 of the mobile device 120 can be configured to select a transmission mode to use for transmitting the data packets of the data stream to the femtocell 115, which can then route the data stream to the intended recipient of the data stream. For example, in the example implementation illustrated in **FIG. 2****,** the mobile device 120 includes both an LTE interface 230 and a WiFi interface 235. The aggregation layer 225 of the mobile device 120 can be configured to determine whether to transmit the data packets from the stream of data packets to the femtocell 115 via a LTE interface 230 of the mobile device, to send the data packets from the stream of data packets to the femtocell 115 via the modem / router 130 using the WiFi interface 235 of the mobile device 120 to send the data packets to the router / modem 130, or to transmit a first portion of the data packets from the stream of data packets to the femtocell 115 using the LTE interface 230 of the mobile device and to send a second portion of data packets from the stream of data packets to the femtocell 115 via the modem / router 130 using the WiFi interface 235 of the mobile device 120 to send the data packets to the router / modem 130.

The data packets can then be sent according to the selected transmission mode (stage 1415). The aggregation layer 225 of the mobile device 120 can be configured to send the data packets to the femtocell 115 according to the aggregation method selected. In the event that an aggregate data stream is to be transmitted over both the WiFi and the LTE connections, the aggregation layer 225 of the mobile device 120 can be configured to send a signal to the aggregation layer 205 of the femtocell 115 to indicate that the start of an aggregation session.

**FIG. 15** is a flow diagram of an example process for selecting a transmission mode at the mobile device 120 that can be used to implement the techniques disclosed herein. The process illustrated in **FIG. 15** can be used implement stage 1410 of the process illustrated in **FIG. 14****.** The process illustrated in **FIG. 15** can be implemented by the mobile device 120.

The femtocell 115 can be configured to determine channel characteristics of the WiFi and/or the LTE uplink channels (stage 1505). For example, the aggregation layer 225 of the mobile device 120 can be configured to request uplink channel condition information from the femtocell 115. The aggregation layer 225 of the mobile device 120 can also be configured to periodically receive channel condition information from the femtocell 115 for the LTE uplink channels and/or from the modem / router 130 for the WiFi downlink channels.

The mobile device 120 can also be configured to determine a data load currently associated with the WiFi and LTE uplink channels (stage 1510). The aggregation layer 225 of the mobile device 120 can be configured to keep track of what data is being routed to the mobile device via the WiFi and LTE uplink channels. The femtocell 115 and/or the modem / router 130 may also be configured to periodically provide load information to the mobile device 120.

A transmission mode can be selected based at least in part on the channel characteristics and/or the loading of the channels (stage 1515). The aggregation layer 225 of the mobile device 120 can be configured to select which transmission mode to use based on the channel characteristics and/or the loading of the channels. The aggregation layer 225 can also be configured to take into consideration other factors, such as the QoS associated with the mobile device 120, the data stream to be transmitted to the mobile device 120, and/or the QoS associated with other data to be transmitted to mobile device 120 and/or the QoS associated with another mobile device that is connected to the femtocell 115 and/or the modem / router 130.

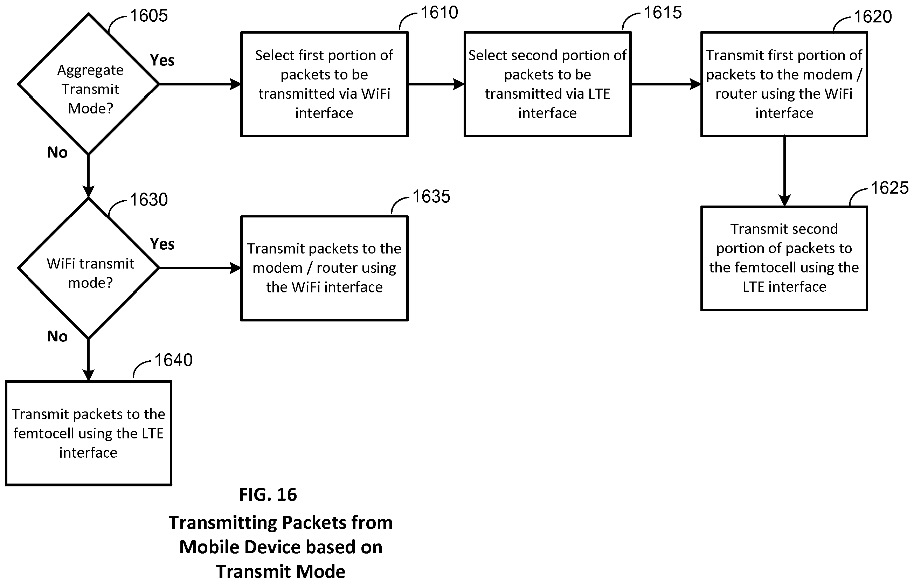

**FIG. 16** is a flow diagram of an example process for sending uplink data packets to a femtocell 115 from a mobile device 120 that can be used to implement the techniques disclosed herein. The process illustrated in **FIG. 16** can be used to implement stage 1415 of the process illustrated in **FIG. 14****.** The process illustrated in FIG. 16 can be implemented by mobile device 120.

A determination can be made whether the aggregate transmission mode has been selected (stage 1605). The aggregation layer 225 of the mobile device 120 can determine a transmission mode to be used for sending a uplink data stream from the mobile device 120 to the femtocell 115. If the aggregate transmission mode is selected by the aggregation layer 225, the data packets from the uplink data stream can be transmitted to the femtocell 115 over both the LTE and WiFi channels.

If the hybrid / aggregate transmit mode has been selected, a first portion of the packets to be transmitted to the femtocell 115 can be selected to be transmitted to the femtocell 115 via the modem / router 130 (stage 1610). A second portion of the packets to be transmitted to the mobile device 120 can be selected to be transmitted to the mobile device 120 via the LTE interface 230 of the mobile device 120 (stage 1615).

The first portion of the data packets can be transmitted the modem / router 130 via the WiFi interface 235 of the mobile device 120 (stage 1620). The aggregation layer 225 can set the destination IP address of the data packets to the IP address associated with the remote network entity intended to receive the packet. The modem / router 130 can receive the first portion of the data packets via the WiFi interface 245 and route the packets to the femtocell 115 via the Ethernet interface 240.

The second portion of the data packets can be transmitted to the femtocell 115 using the LTE interface 230 of the mobile device (stage 1625). The aggregation layer 225 of the mobile device 120 can be configured to send the second portion of the data packets to the femtocell 115 via the LTE interface 230 of the mobile device 120.

If the hybrid / aggregate transmit mode was not selected, a determination can be made whether the WiFi-only transmit mode has been selected (stage 1630). If the WiFi-only transmit mode has been selected, the aggregation layer 225 of the mobile device 120 can be configured to transmit the data packets of the data stream via the WiFi interface 235 to the modem / router 130 for routing to the femtocell 115 (stage 1635).

If the neither the hybrid / aggregate transmit mode nor the WiFi-only mode were selected, the aggregation layer 225 of the mobile device 120 can be configured to transmit the data packets from the data stream to the femtocell 115 via the LTE interface 230 of the mobile device 120 (stage 1640). The source IP address of the packets can be set to the IP address associated with the LTE interface 230 of the mobile device 120 and the destination IP address of the packets can be set to the IP address of the remote network entity to which the packets are to ultimately be routed by the femtocell 115.

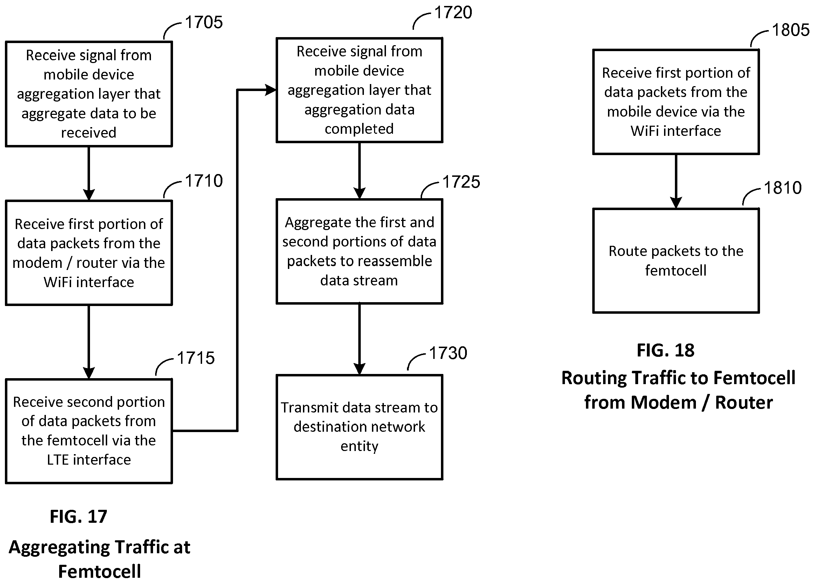

**FIG. 17** is a flow diagram of an example process for receiving data packets at femtocell 115 on uplinks from a mobile device 120 where the data packets are transmitted over WiFi and LTE interfaces between the femtocell 115 and the mobile device 120 that can be used to implement the techniques disclosed herein. The process illustrated in **FIG. 17** can be implemented by the femtocell 115.

The aggregation layer 205 of the femtocell 115 and the aggregation layer 225 of the mobile device 120 can be configured to exchange aggregation information via the LTE interface between the femtocell 120 and the mobile device 120 or via the WiFi interface between the mobile device 120 and the modem / router 130. The aggregation information exchanged can include MAC address information, IP address information, port information, and other information that the aggregation layers of the two devices can use when routing information according to the various techniques disclosed herein. The aggregation layer 205 of the femtocell and the aggregation layer 225 of the mobile device 120 can be configured such that the exchange of aggregation information can occur whenever the femtocell 115 and/or the mobile device 120 are powered on. The aggregation layer 205 of the femtocell and the aggregation layer 225 of the mobile device 120 can be configured such that the exchange of aggregation information can also whenever the mobile device 120 or the femtocell 115 is assigned a new IP address or the IP address of the mobile device 120 or the femtocell 115 is updated. The aggregation layer 205 of the femtocell and the aggregation layer 225 of the mobile device 120 can be configured such that the exchange of aggregation information does not occur every time an aggregation session is established between the devices. Instead, the respective aggregation layers of the femtocell 115 and the mobile device 120 can be configured to exchange the aggregation information with the other device in response to an event where the aggregation information changes, such as a device being assigned an IP address or receiving an updated IP address, a change to port information, and/or other changes to the aggregation information.

The femtocell 115 can receive a signal from the mobile device 120 indicating the start of an aggregate data session between the mobile device 120 and the femtocell 115 (stage 1705). The aggregation layer 225 of the mobile device 120 can be configured to send a signal to the aggregation layer 205 of the femtocell 115 to signal that a data stream is about to be sent to the femtocell 115 via WiFi and LTE connections between the mobile device 120 and the femtocell 115. In some implementations, when the aggregation layer 205 of the femtocell can be configured to block other data packets from being transmitted to the femtocell 115 and the modem / router 130 to the mobile device 120 for the duration of an aggregation session.

The femtocell 115 can then receive a first set of data packets from the mobile device 120 via the modem / router 130 (stage 1710). The aggregation layer 225 of the mobile device 120 can be configured to select a first portion of the data packets to be transmitted to the femtocell 115 via the WiFi interface 235 of the mobile device 120. The first portion of the packets are transmitted to the modem / router 130, which can then route the received packets to the femtocell 115 via the Ethernet connection between the modem / router 130 and the femtocell 115.

The femtocell 115 can then receive a second portion of data packets from mobile device 120 via the LTE interface 215 (stage 1715). The aggregation layer 225 of the mobile device 120 can be configured to select a first portion of the data packets of the aggregate data stream to be transmitted to the femtocell 115 via the LTE interface 230 of the mobile device 120. The femtocell 115 can be configured to receive these data packets via the LTE interface 215, and the LTE interface 215 can be configured to provide the received data packets to the aggregation layer 205 of the femtocell 115.

The femtocell 115 can then receive a signal from the mobile device 120 indicating the end of the aggregate data session between the femtocell 115 and the mobile device 120 (stage 1715). The aggregation layer 225 of the mobile device 120 can be configured to send a signal to the aggregation layer 205 of the femtocell 115 to signal that the data associated the data stream has been transmitted and that the aggregate data session between the femtocell 115 and the mobile device 120 has ended.

The femtocell 115 can then aggregate the stream of data packets from the first set of data packet and the second set of data packets to reassemble the data stream that had originally been split into the first and second portions transmitted over the WiFi and LTE, connections respectively (stage 1720). The aggregation layer 205 of the femtocell 115 can be configured to aggregate the first and second portions of the data packets received from the mobile device 120 in response to receiving the signal from the femtocell that the aggregate data session has completed. In some implementations, the aggregation layer 205 can be configured to begin reassembling the original data stream from the packets received from the modem / router 130 and the LTE interface 215 as the data packets are received. In some implementations, the data packets can include a packet sequence number that indicates the relative position of the packet in the original data stream, and the aggregation layer can use the packet sequence number to determine where the packet belongs in the aggregate data stream. The aggregation layer 205 can be configured to send the aggregate data stream to secure server 150, which may in turn send the data stream to a remote network entity, such as server 125 or even to another mobile device 120. The other mobile device 120 may be connected to the the femtocell and/or the modem / router 130 or may be associated with another base station or wireless access point. In some implementations, the aggregation layer 205 can be configured to buffer at least a portion of the aggregate data stream in a memory of the femtocell 115 before streaming the data stream to the remote network entity. The size of the buffer used by the aggregation layer 205 may be dependent on the data rates provided by the WiFi and LTE connection, and a smaller buffer may be required where the WiFi and LTE connections provide a higher data and a larger buffer may be required if the WiFi and/or LTE connections provide a lower data rate. The aggregation layer 205 can be configured to determine the size of the buffer based at least in part on the channel conditions over the LTE and WiFi connections.

The aggregated data stream can then be forwarded to the intended recipient (stage 1725). In some implementations, the femtocell 115 may be configured to forward the aggregate data stream to the server gateway 150, which may in turn forward the data stream to another remote network entity, such as the server 125 or to another mobile device 120 (stage 1730).

**FIG. 18** is a flow diagram of an example process for routing packets received from the mobile device 120 at the modem / router 130 to the femtocell 115 that can be used to implement the techniques disclosed herein. The process illustrated in FIG. 18 can be implemented by the modem router 130. The process begins with receiving a first portion of data packets associated with the data stream from the mobile device 120 via the WiFi interface 245 of the modem / router 130 (stage 1805). The modem / router 130 can be configured to route the packets to the femtocell 115 (stage 1810). The modem / router 130 can be configured to route the packets to the femtocell 115 via the Ethernet interface 240. If the encapsulation technique illustrated in FIG. 9 is being implemented, the data packets received on the uplink from the mobile device may have their destination MAC field 905 set to the MAC address of the WiFi interface 245 of the modem / router 130 and the destination IP address field. In other implementations, where the encapsulation technique is not being used, a frame format similar to that illustrated in **FIG. 8** may be used, and the destination MAC address field 810 can be set to the MAC address of the femtocell 115 and the source MAC address filed 815 can be set to the MAC address associated with the UE LTE interface.

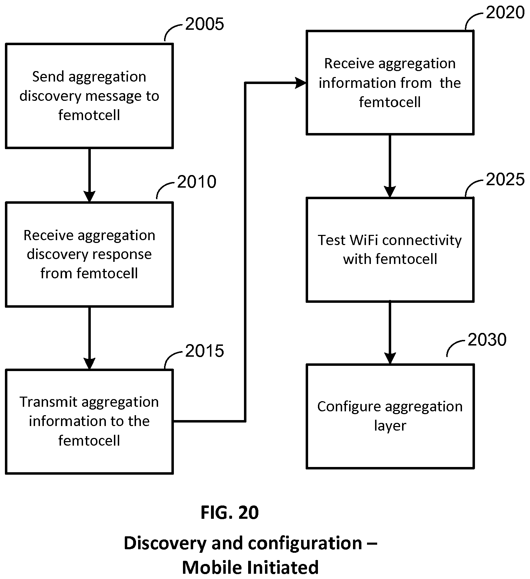

**FIG. 20** is a flow diagram of an example of a mobile device-initiated process for discovery and configuration of aggregation layers that can be used to implement the techniques disclosed herein. The method illustrated in FIG. 20 can be implemented by the mobile device 120.

The mobile device 120 can be configured to initiate the discovery and configuration process for the aggregation layer 225 of the mobile device 120 and the aggregation layer 205 of the femtocell 115. The mobile device 120 can be configured to initiate the discovery and configuration process in response to an LTE connection being established between the mobile device 120 and the femtocell 115. The LTE connection may be established when the mobile device 120 enters the coverage area of the femtocell 115 and may be associated with a handoff from a macrocell base station or another femtocell 115. The mobile device 120 can also be configured to initiate the discovery and configuration process if the mobile device 120 is rebooted. The mobile device 120 can also be configured to initiate the discovery and configuration process if one or more communications parameters, such as the IP address associated with the LTE interface 120 and/or the WiFi interface 235 of the mobile device 120 are assigned or updated.

The discovery and configuration process may begin with the mobile device 120 sending an aggregation discovery message to the femtocell 115 (stage 2005). The aggregation discovery message can be sent to the femtocell 115 to determine whether the femtocell 115 is configured to support the aggregation techniques disclosed herein and to configure the aggregation layer 205 of the femtocell 115 and the aggregation layer 225 of the mobile device 120. The aggregation discovery message can be transmitted over an LTE connection between the mobile device 120 and the femtocell 115. The aggregation discovery message can comprise a request for information from the femtocell 115 to identify whether the femtocell 115 is configured to support the aggregation techniques disclosed herein. The aggregation discovery message can include information, such as a version or versions of the aggregation protocols supported by the mobile device 120. The aggregation discovery message can be generated by the aggregation layer 225 of the mobile device. In some implementations, if the femtocell 115 does not support the data aggregation techniques disclosed herein, the mobile device 120 may not receive a response to the aggregation discovery message. The aggregation layer 225 can be configured to resend the aggregation discovery message a predetermined number of times before determining that the femtocell 115 is not configured to support aggregation. The aggregation layer 225 may also be configured wait for a timeout period to elapse before resending an aggregation discovery message or making a determination that the femtocell 115 is not going to respond to the aggregation discovery message.

The mobile device 120 may then receive an aggregation discovery response from the femtocell 115 (stage 2010) in response to the aggregation discovery message sent to the femtocell 115. The aggregation discovery response can be received by the mobile device 120 via the LTE interface 230. The aggregation discovery response can include information, such as the version or versions of the aggregation protocols supported by the femtocell 115. The aggregation discovery response may also select a version of the aggregation protocols to be used for communications between the femtocell 115 and the mobile device 120. In other implementations, the highest version number of the aggregation protocols supported by both the mobile device 120 and the femtocell 115 may be selected by the aggregation layer 225 of the mobile device 120 for use with aggregation sessions communications with the femtocell 115.

The mobile device 120 may then transmit aggregation information to the femtocell 115 (stage 2015). The mobile device 120 can transmit aggregation information to the femtocell 115 via an LTE connection between the mobile device 120 and the femtocell 115. The aggregation information can include MAC address information, IP address information, port information, and other information that the aggregation layers of the two devices can use when routing information according to the various techniques disclosed herein. For example, the aggregation information transmitted to the femtocell 115 may include the MAC address and/or the IP address of the WiFi interface 235 of the mobile device 120.

The mobile device 120 may also receive aggregation information from the femtocell 115 (stage 2020). The aggregation information received from the femtocell 115 can include MAC address information, IP address information, port information, and other information that the aggregation layers of the two devices can use when routing information according to the various techniques disclosed herein. For example, the aggregation information received from the femtocell 115 may include the MAC address and/or the IP address of the WiFi interface 245 of the modem / router 130 and/or other information that the aggregation layer 225 of the mobile device 120 may use to send and/or receive aggregate data streams. The aggregation information received from the femtocell 115 can also include aggregation policy information. The aggregation policy information can be used by the aggregation layer 225 of the mobile device 120 when selecting a transmission mode for sending data to the femtocell 115. For example, the aggregation policy may indicate that certain types of data streams should be transmitted using a particular transmission mode or that aggregation cannot be used with certain types of data streams.

WiFi connectivity between the mobile device 120 and the femtocell 115 can also be tested (stage 2025). The mobile device 120 can be configured to send a test message to the aggregation layer 205 of the femtocell 115 to determine whether there is connectivity between the mobile device 120 and the femtocell 115 via the WiFi interface. The mobile device 120 can transmit the test message to the modem / router 130 using the WiFi interface 235 and the modem / router 130 can route the test message to the femtocell 115. The aggregation layer 205 of the femtocell 115 can be configured to send a test message response to the aggregation layer 225 of the mobile device 120 in response to the femtocell 115 receiving the test message from the mobile device 120. The aggregation layer 205 can be configured to send the test message response to the mobile device 120 via the Ethernet interface 210, and the modem / router 130 can then transmit the test message response to the mobile device 120 via the WiFi interface 245. In some implementations, the mobile device 120 may also send a test message response to the mobile device 120 via the LTE interface 215 in the event that the message sent via the WiFi connection is not received by the mobile device 120, the aggregation layer 225 of the mobile device 120 will be able to identify that the test message was received by the femtocell 115 but the response sent by the femtocell 115 never reached the mobile device 120. Testing the WiFi connectivity as part of the discovery and configuration process can also include making a determination whether or not the modem / router 130 can support bridge functionality. The aggregation layer 225 of the mobile device 120 can be configured to determine whether the modem / router 130 is configured to support bridge functionality by examining the IP subnet masks and/or the IP addresses associated with the femtocell 115 and the mobile device 120 to determine whether the modem / router 130 is configured to support bridge functionality.

The aggregation layer 225 of the mobile device 120 can then be configured based on the aggregation information received from the femtocell (stage 2030). The aggregation layer 225 can be configured to enable data aggregation if connectivity between the mobile device 120 and the femtocell 115 has been verified. The aggregation layer 225 can be configured to use the aggregation information received from the femtocell 115, including any aggregation policy information included therein, to determine a transmission mode to use for uplink data as described in the various techniques disclosed herein. In some implementations, the aggregation layer 225 of the mobile device 120 can be configured to disable automatic selection of the WiFi connection when in the coverage area of the modem / router 130. Some mobile devices 120 can be configured to automatically connect to a WiFi access point, such as the modem / router 130, when wireless local access network (WLAN) connectivity is available and to switch off the LTE or other WWAN connectivity. Some mobile devices are configured to automatically switch to WiFi-only connectivity when WiFi is available to reduce data usage on the LTE network or other WWLAN. The aggregation layer 225 of the mobile device 120 can also be configured to select either the non-encapsulation approach illustrated in FIG. 8 when sending uplink data to the femtocell 115 during aggregation sessions if the modem / router 130 supports bridge functionality or to select the encapsulation approach illustrated in **FIG. 9** if the modem / router 130 does not support bridge functionality (as determined in stage 2025).

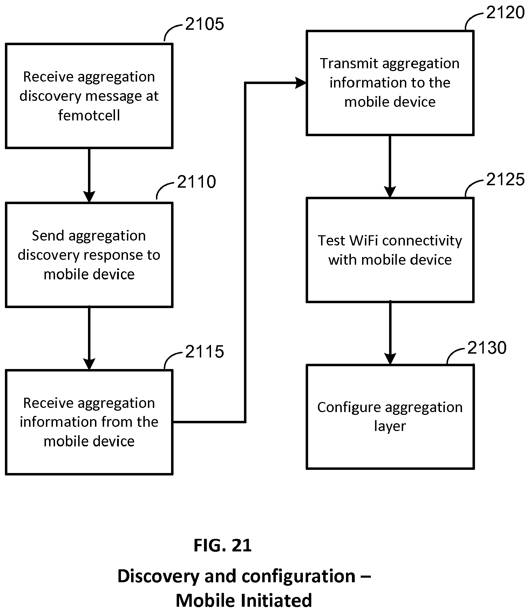

**FIG. 21** is a flow diagram of an example of a mobile device-initiated process for discovery and configuration of aggregation layers that can be used to implement the techniques disclosed herein. The method illustrated in **FIG. 21** can be implemented by the femtocell 115.

The femtocell 115 can receive an aggregation discovery message from the mobile device 120 (stage 2105). The femtocell 115 can receive the aggregation discovery message from the mobile device 120 via the LTE interface 215. The aggregation discovery message can comprise a request for information from the femtocell 115 to identify whether the femtocell 115 is configured to support the aggregation techniques disclosed herein. The aggregation discovery message can include information, such as a version or versions of the aggregation protocols supported by the mobile device 120.

The femtocell 115 can send an aggregation discovery response to the mobile device 120 in response to receiving the aggregation discovery request (stage 2110). The femtocell 115 can be configured to send the aggregation discovery response to the mobile device 120 via the LTE interface 215. The aggregation discovery response can include information, such as the version or versions of the aggregation protocols supported by the femtocell 115. The aggregation discovery response may also select a version of the aggregation protocols to be used for communications between the femtocell 115 and the mobile device 120. For example, the aggregation layer 205 of the femtocell can be configured to select the highest version number of the aggregation protocols supported by both the mobile device 120 and the femtocell 115 for use with aggregation sessions with the mobile device 120.

The femtocell 115 can receive aggregation information from the mobile device 120 (stage 2115). The femtocell 115 can receive aggregation information from the mobile device 120 via an LTE connection between the mobile device 120 and the femtocell 115. The aggregation information can include MAC address information, IP address information, port information, and other information that the aggregation layers of the two devices can use when routing information according to the various techniques disclosed herein. For example, the aggregation information received by the femtocell 115 may include the MAC address and/or the IP address of the WiFi interface 235 of the mobile device 120.

The femtocell 115 can also send aggregation information to the mobile device 120 (stage 2120). The aggregation information received from the femtocell 115 can include MAC address information, IP address information, port information, and other information that the aggregation layers of the two devices can use when routing information according to the various techniques disclosed herein. For example, the aggregation information received from the femtocell 115 may include the MAC address and/or the IP address of the WiFi interface 245 of the modem / router 130 and/or other information that the aggregation layer 225 of the mobile device 120 may use to send and/or receive aggregate data streams. The aggregation information received from the femtocell 115 can also include aggregation policy information. The aggregation policy information can be used by the aggregation layer 225 of the mobile device 120 when selecting a transmission mode for sending data to the femtocell 115. For example, the aggregation policy may indicate that certain types of data streams should be transmitted using a particular transmission mode or that aggregation cannot be used with certain types of data streams.

The femtocell 115 can be configured to test WiFi connectivity with the mobile device 120 (stage 2125). In some implementations, the aggregation layer 225 of the mobile device 120 can be configured to send a test message to the femtocell 115 and the aggregation layer 205 of the femtocell 115 can be configured to respond to the test message. In other implementations, the aggregation layer 205 of the femtocell 115 can be configured to send a test message to the mobile device 120 and the aggregation layer 225 of the mobile device 120 can be configured to respond to the test message. The exchange of messages between the femtocell 115 and the mobile device 120 can be used to determine whether the WiFi connectivity between the two devices has been established. In some implementations, the femtocell 115 can be configured to send the test message and/or the test messages response to the mobile device 120 via the LTE interface 215 in addition to sending the test message and/or response over the WiFi connection to facilitate diagnosing problems with the WiFi connectivity in the event that there problems establishing the WiFi connection between the femtocell 115 and the mobile device 120. Testing the WiFi connectivity as part of the discovery and configuration process can also include making a determination whether or not the modem / router 130 can support bridge functionality. The aggregation layer 205 of the femtocell 115 can be configured to determine whether the modem / router 130 is configured to support bridge functionality by examining the IP subnet masks and/or the IP addresses associated with the femtocell 115 and the mobile device 120 to determine whether the modem / router 130 is configured to support bridge functionality.

The femtocell 115 can configure the aggregation layer 205 (stage 2130). The aggregation layer 205 can be configured to enable data aggregation if connectivity between the mobile device 120 and the femtocell 115 has been verified. The aggregation layer 205 can be configured to use the aggregation information shared with the mobile device 120, including any aggregation policy information included therein, to determine a transmission mode to use for uplink data as described in the various techniques disclosed herein. Once the aggregation layer 205 has been configured, the femtocell 115 can execute one or more of the aggregation techniques discussed herein with the mobile device 120. The femtocell 115 can be configured to communicate with multiple mobile devices 120 and can be configured to perform the discovery and configuration process described herein for each mobile device 120 connected to the femtocell 115. The aggregation layer 205 of the femtocell 115 can also be configured to select either the non-encapsulation approach illustrated in FIG. 8 when sending downlink data to the mobile device 120 during aggregation sessions if the modem / router 130 supports bridge functionality or to select the encapsulation approach illustrated in **FIG. 9** if the modem / router 130 does not support bridge functionality (as determined in stage 2125).

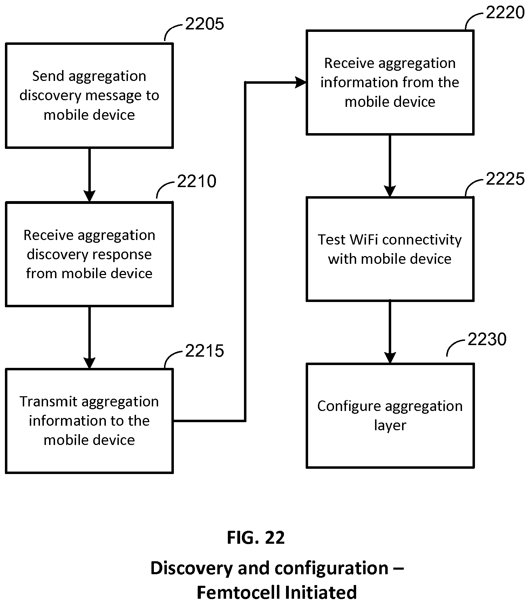

**FIG. 22** is a flow diagram of an example of a femtocell-initiated process for discovery and configuration of aggregation layers that can be used to implement the techniques disclosed herein. The method illustrated in FIG. 22 can be implemented by the femtocell 115.

The femtocell 115 can be configured to initiate the discovery and configuration process for configuring the aggregation layer 205 of the femtocell 115 and the aggregation layer 205 of the mobile device. The femtocell 115 can be configured initiate the discovery and configuration process in response to an LTE connection being established between the femtocell 115 and the mobile device 120. The LTE connection may be established when the mobile device 120 enters the coverage area of the femtocell 115 and may be associated with a handoff from a macrocell base station or another femtocell 115. The discovery and configuration process may begin with the femtocell 115 sending an aggregation discovery message to the mobile device 120.

The discovery and configuration process may begin with the femtocell 115 sending an aggregation discovery message to the mobile 120 (stage 2205). The aggregation discovery message can be sent to the mobile device 120 to determine whether the mobile device 120 is configured to support the aggregation techniques disclosed herein and to configure the aggregation layer 205 of the femtocell 115 and the aggregation layer 225 of the mobile device 120. The aggregation discovery message can be transmitted over an LTE connection between the femtocell 115 and the mobile device 120. The aggregation discovery message can comprise a request for information from the mobile device 120 to identify whether the mobile device 120 is configured to support the aggregation techniques disclosed herein. The aggregation discovery message can include information, such as a version or versions of the aggregation protocols supported by the femtocell 115. The aggregation discovery message can be generated by the aggregation layer 205 of the femtocell 115. In some implementations, if the mobile device 120 does not support the data aggregation techniques disclosed herein, the femtocell 115 may not receive a response to the aggregation discovery message. The aggregation layer 205 can be configured to resend the aggregation discovery message a predetermined number of times before determining that the mobile device 120 is not configured to support aggregation. The aggregation layer 205 may also be configured wait for a timeout period to elapse before resending an aggregation discovery message or making a determination that the mobile device 120 is not going to respond to the aggregation discovery message.

The femtocell 115 may then receive an aggregation discovery response from the mobile device 120 (stage 2210) in response to the aggregation discovery message sent to the mobile device 120. The aggregation discovery response can be received by the femtocell 115 via the LTE interface 215. The aggregation discovery response can include information, such as the version or versions of the aggregation protocols supported by the mobile device 120. The aggregation discovery response may also select a version of the aggregation protocols to be used for communications between the femtocell 115 and the mobile device 120. In other implementations, the highest version number of the aggregation protocols supported by both the mobile device 120 and the femtocell 115 may be selected by the aggregation layer 205 of the femtocell 115 for use with aggregation sessions communications with the mobile device 120.

The femtocell 115 can transmit aggregation information to the mobile device 120 (stage 2215). The aggregation information sent by the femtocell 115 can include MAC address information, IP address information, port information, and other information that the aggregation layers of the two devices can use when routing information according to the various techniques disclosed herein. For example, the aggregation information sent by the femtocell 115 can include the MAC address and/or the IP address of the WiFi interface 245 of the modem / router 130 and/or other information that the aggregation layer 225 of the mobile device 120 may use to send and/or receive aggregate data streams. The aggregation information received sent by the femtocell 115 can also include aggregation policy information. The aggregation policy information can be used by the aggregation layer 225 of the mobile device 120 when selecting a transmission mode for sending data to the femtocell 115. For example, the aggregation policy may indicate that certain types of data streams should be transmitted using a particular transmission mode or that aggregation cannot be used with certain types of data streams.

The femtocell 115 can also receive aggregation information from the mobile device 120 (stage 2220). The mobile device 120 can transmit aggregation information to the femtocell 115 via an LTE connection between the mobile device 120 and the femtocell 115. The aggregation information can include MAC address information, IP address information, port information, and other information that the aggregation layers of the two devices can use when routing information according to the various techniques disclosed herein. For example, the aggregation information transmitted to the femtocell 115 may include the MAC address and/or the IP address of the WiFi interface 235 of the mobile device 120.

WiFi connectivity between the femtocell 115 and the mobile device 120 can also be tested (stage 2225). In some implementations, the aggregation layer 225 of the mobile device 120 can be configured to send a test message to the femtocell 115 and the aggregation layer 205 of the femtocell 115 can be configured to respond to the test message. In other implementations, the aggregation layer 205 of the femtocell 115 can be configured to send a test message to the mobile device 120 and the aggregation layer 225 of the mobile device 120 can be configured to respond to the test message. The exchange of messages between the femtocell 115 and the mobile device 120 can be used to determine whether the WiFi connectivity between the two devices has been established. In some implementations, the femtocell 115 can be configured to send the test message and/or the test messages response to the mobile device 120 via the LTE interface 215 in addition to sending the test message and/or response over the WiFi connection to facilitate diagnosing problems with the WiFi connectivity in the event that there problems establishing the WiFi connection between the femtocell 115 and the mobile device 120. Testing the WiFi connectivity as part of the discovery and configuration process can also include making a determination whether or not the modem / router 130 can support bridge functionality. The aggregation layer 205 of the femtocell 115 can be configured to determine whether the modem / router 130 is configured to support bridge functionality by examining the IP subnet masks and/or the IP addresses associated with the femtocell 115 and the mobile device 120 to determine whether the modem / router 130 is configured to support bridge functionality.

The aggregation layer 205 of the femtocell 115 can then be configured based on the aggregation information received from the mobile device 120 and the aggregation policy information associated with the mobile device 120 (if any) (stage 2230). The aggregation layer 205 can be configured to enable data aggregation if connectivity between the mobile device 120 and the femtocell 115 has been verified. The aggregation layer 205 can be configured to use the aggregation information received from the mobile device, as well as any aggregation policy information associated with the mobile device 120, to determine a transmission mode to use for uplink data as described in the various techniques disclosed herein. The aggregation layer 205 of the femtocell 115 can be configured to select either the non-encapsulation approach illustrated in **FIG. 8** when sending downlink data to the mobile device 120 during aggregation sessions if the modem / router 130 supports bridge functionality or to select the encapsulation approach illustrated in **FIG. 9** if the modem / router 130 does not support bridge functionality (as determined in stage 2225).

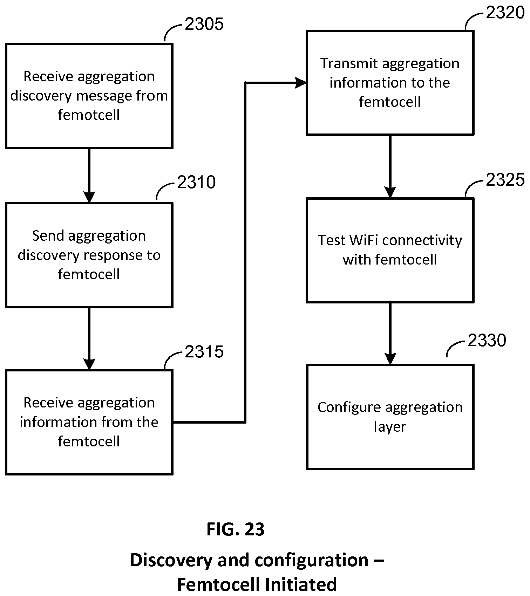

**FIG. 23** is a flow diagram of an example of a femtocell-initiated process for discovery and configuration of aggregation layers that can be used to implement the techniques disclosed herein. The method illustrated in **FIG. 23** can be implemented by the mobile device 120.

The mobile device 120 can receive an aggregation discovery message from the femtocell 115 (stage 2305). The mobile device 120 can receive the aggregation discovery message from the femtocell 115 via the LTE interface 230. The aggregation discovery message can comprise a request for information from the mobile device 120 to identify whether the mobile device 120 is configured to support the aggregation techniques disclosed herein. The aggregation discovery message can include information, such as a version or versions of the aggregation protocols supported by the femtocell 115.

The mobile device 120 can send an aggregation discovery response to the femtocell 115 in response to receiving the aggregation discovery request (stage 2310). The aggregation layer 225 of the mobile device 120 can be configured to send the aggregation discovery response to the femtocell 115 via the LTE interface 225. The aggregation discovery response can include information, such as the version or versions of the aggregation protocols supported by the mobile device 120. The aggregation discovery response may also select a version of the aggregation protocols to be used for communications between the femtocell 115 and the mobile device 120. For example, the aggregation layer 225 of the femtocell can be configured to select the highest version number of the aggregation protocols supported by both the mobile device 120 and the femtocell 115 for use with aggregation sessions with the femtocell. In some implementations, the femtocell 115 can be configured to select the version of the aggregation protocols to use when communicating with the mobile device 120.

The mobile device can receive aggregation information from the femtocell 115 (stage 2315). The mobile device 120 can receive aggregation information from the femtocell 115 via an LTE connection between the mobile device 120 and the femtocell 115. The aggregation information received from the femtocell 115 can include MAC address information, IP address information, port information, and other information that the aggregation layers of the two devices can use when routing information according to the various techniques disclosed herein. For example, the aggregation information received from the femtocell 115 may include the MAC address and/or the IP address of the WiFi interface 245 of the modem / router 130 and/or other information that the aggregation layer 225 of the mobile device 120 may use to send and/or receive aggregate data streams. The aggregation information received from the femtocell 115 can also include aggregation policy information. The aggregation policy information can be used by the aggregation layer 225 of the mobile device 120 when selecting a transmission mode for sending data to the femtocell 115. For example, the aggregation policy may indicate that certain types of data streams should be transmitted using a particular transmission mode or that aggregation cannot be used with certain types of data streams.

The mobile device 120 can also send aggregation information to the femtocell 115 (stage 2320). The aggregation information can include MAC address information, IP address information, port information, and other information that the aggregation layers of the two devices can use when routing information according to the various techniques disclosed herein. For example, the aggregation information sent to the femtocell 115 may include the MAC address and/or the IP address of the WiFi interface 235 of the mobile device 120.

The mobile device 120 can be configured to test WiFi connectivity with the mobile femtocell 115 (stage 2325). In some implementations, the aggregation layer 225 of the mobile device 120 can be configured to send a test message to the femtocell 115 and the aggregation layer 205 of the femtocell 115 can be configured to respond to the test message. In other implementations, the aggregation layer 205 of the femtocell 115 can be configured to send a test message to the mobile device 120 and the aggregation layer 225 of the mobile device 120 can be configured to respond to the test message. The exchange of messages between the femtocell 115 and the mobile device 120 can be used to determine whether the WiFi connectivity between the two devices has been established. In some implementations, the mobile device 120 can be configured to send the test message and/or the test messages response to the femtocell 115 via the LTE interface 230 in addition to sending the test message and/or response over the WiFi connection to facilitate diagnosing problems with the WiFi connectivity in the event that there problems establishing the WiFi connection between the femtocell 115 and the mobile device 120. Testing the WiFi connectivity as part of the discovery and configuration process can also include making a determination whether or not the modem / router 130 can support bridge functionality. The aggregation layer 225 of the mobile device 120 can be configured to determine whether the modem / router 130 is configured to support bridge functionality by examining the IP subnet masks and/or the IP addresses associated with the femtocell 115 and the mobile device 120 to determine whether the modem / router 130 is configured to support bridge functionality.

The mobile device 120 can configure the aggregation layer 225 (stage 2330). The aggregation layer 225 can be configured to enable data aggregation if connectivity between the mobile device 120 and the femtocell 115 has been verified. The aggregation layer 225 can be configured to use the aggregation information shared with the mobile device 120 by the femtocell 115, including any aggregation policy information included therein, to determine a transmission mode to use for uplink data as described in the various techniques disclosed herein. Once the aggregation layer 225 has been configured, the mobile device 120 can execute one or more of the aggregation techniques discussed herein with the femtocell 115. The aggregation layer 225 of the mobile device 120 can be configured to select either the non-encapsulation approach illustrated in **FIG. 8** when sending uplink data to the femtocell 115 during aggregation sessions if the modem / router 130 supports bridge functionality or to select the encapsulation approach illustrated in **FIG. 9** if the modem / router 130 does not support bridge functionality (as determined in stage 2325).

The methodologies described herein may be implemented by various means depending upon the application. For example, these methodologies may be implemented in hardware, firmware, software, or any combination thereof. For a hardware implementation, the processing units may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, electronic devices, other electronic units designed to perform the functions described herein, or a combination thereof.

For a firmware and/or software implementation, the methodologies may be implemented with modules (e.g., procedures, functions, and so on) that perform the functions described herein. Any machine-readable medium tangibly embodying instructions may be used in implementing the methodologies described herein. For example, software codes may be stored in a memory and executed by a processor unit. Memory may be implemented within the processor unit or external to the processor unit. As used herein the term "memory" refers to any type of long term, short term, volatile, nonvolatile, or other memory and is not to be limited to any particular type of memory or number of memories, or type of media. Tangible media include one or more physical articles of machine readable media, such as random access memory, magnetic storage, optical storage media, and so on.

If implemented in firmware and/or software, the functions may be stored as one or more instructions or code on a computer-readable medium. Examples include computer-readable media encoded with a data structure and computer-readable media encoded with a computer program. Computer-readable media includes physical computer storage media. A storage medium may be any available medium that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to store desired program code in the form of instructions or data structures and that can be accessed by a computer; disk and disc, as used herein, includes compact disc (CD), laser disc, optical disc, digital versatile disc (DVD), floppy disk and Blu-ray disc where disks usually reproduce data magnetically, while discs reproduce data optically with lasers. Combinations of the above should also be included within the scope of computer-readable media. Such media also provide examples of non-transitory media, which can be machine readable, and wherein computers are an example of a machine that can read from such non-transitory media.

## Claims

1. A method for aggregating wireless communications traffic in a femtocell (115), the method comprising:
receiving (1005) at a femtocell a stream of data packets for a mobile device (120) from a wireless transceiver connected to the femtocell through a network interface;
selecting (1010), by the femtocell, a transmission mode, for sending data packets of the stream of data packets from the femtocell to the mobile device, the selecting comprising determining whether to transmit the data packets from the stream of data packets to the mobile device using a first transmission mode, second transmission mode, or third transmission mode, wherein:
the first transmission mode comprises transmitting the data packets from the stream via a Long Term Evolution, LTE, interface of the femtocell,
the second transmission mode comprises sending the data packets from the femtocell to the wireless transceiver (130) for transmission to the mobile device to transmit the data packets from the stream via a WiFi interface of the wireless transceiver,
the third transmission mode comprises transmitting a first portion of the data packets to the mobile device via the LTE interface and sending a second portion of the data packets from the femtocell to the wireless transceiver for transmission to the mobile device via the WiFi interface, and
sending the data packets according to the selected transmission mode (1015).

2. The method of claim 1 wherein the wireless transceiver (130) is a wireless transceiver of a wireless router; or
wherein selecting the transmission mode comprises selecting the transmission mode based at least in part on link conditions of an LTE link between the femtocell (115) and the mobile device (120); or
wherein selecting the transmission mode comprises selecting the transmission mode based at least in part on link conditions of a WiFi link between the wireless transceiver (130) and the mobile device; or
wherein selecting the transmission mode comprises selecting the transmission mode based at least in part on loading of an LTE link between the femtocell and the mobile device; or
wherein selecting the transmission mode comprises selecting the transmission mode based at least in part on loading of a WiFi link between the wireless transceiver and the mobile device; or
wherein selecting the transmission mode comprises selecting the transmission mode based at least in part on at least on loading of a backhaul of the femtocell; or
wherein sending the data packets according to the selected transmission mode comprises encapsulating packets transmitted from the femtocell to the mobile device; and optionally further comprising:
determining whether the wireless router (130) provides bridging functionality, and wherein the encapsulating packets transmitted from the femtocell (115) to the mobile device (120) is performed if the wireless router does not provide bridging functionality.

3. The method of claim 1, further comprising:
sending a signal to the mobile device (120) indicating a start of an aggregate data session in response to the third transmission mode being selected; or
wherein selecting the transmission mode further comprises:
selecting the second transmission mode for LTE user plane data; and
selecting the first transmission mode for LTE control plane data; or
further comprising:
sending an aggregation discovery message to the mobile device;
receiving an aggregation discovery response from the mobile device;
transmitting first aggregation information to the mobile device;
receiving second aggregation information from the mobile device; and
configuring an aggregation layer of the femtocell based on the first aggregation information and the second aggregation information; and optionally
wherein the first aggregation information comprises aggregation policy information; or further comprising:
testing WiFi connectivity with the mobile device.

4. A femtocell for aggregating wireless communications traffic, the femtocell comprising:
means for receiving at a femtocell a stream of data packets for a mobile device (120) from a wireless transceiver (130) connected to the femtocell through a network interface;
means for selecting a transmission mode, for sending data packets of the stream of data packets from the femtocell to the mobile device, the means for selecting comprising means for determining whether to transmit the data packets from the stream of data packets to the mobile device using a first transmission mode, second transmission mode, or third transmission mode, wherein:
the first transmission mode comprises transmitting the data packets from the stream via a Long Term Evolution, LTE, interface of the femtocell,
the second transmission mode comprises sending the data packets from the femtocell to the wireless transceiver (130) for transmission to the mobile device to transmit the data packets from the stream via a WiFi interface of the wireless transceiver,
the third transmission mode comprises transmitting a first portion of the data packets to the mobile device via the LTE interface and sending a second portion of the data packets from the femtocell to the wireless transceiver for transmission to the mobile device via the WiFi interface, and means for sending the data packets according to the selected transmission mode.

5. A method for aggregating wireless communications traffic in a mobile device (120), the method comprising:
receiving, by the mobile device, a first portion of data packets from a data stream from a femtocell (115) using a first wireless communications protocol, wherein the first wireless communications protocol is a Long Term Evolution, LTE, protocol;
receiving a second portion of data packets from the data stream from a wireless transceiver (130) using a second wireless communications protocol, wherein the second wireless communications protocol is a WiFi wireless communications protocol, the wireless transceiver being separate from the femtocell, wherein the second portion of the data packets is received by the wireless transceiver from the femtocell before being sent to the mobile device by the wireless transceiver and wherein the data packets are received by the femtocell from the wireless transceiver before being sent to the mobile device or to the wireless transceiver by the femtocell; and
aggregating the first portion of the data packets and the second portion of the data packets to reassemble the data stream at the mobile device.

6. The method of claim 5, further comprising:
receiving a signal from the femtocell indicating a start of an aggregate data session prior to receiving the first portion of the data packet and the second portion of the data packets; or
further comprising:
receiving a signal from the femtocell indicating an end of the aggregate data session after receiving the first portion of the data packet and the second portion of the data packets; and/or
wherein the wireless transceiver is a wireless transceiver of a wireless router.

7. A system for aggregating wireless communications traffic in a mobile device (120), the system comprising the mobile device, a femtocell, and a wireless transceiver, the mobile device comprising:
means for receiving, by the mobile device, a first portion of data packets from a data stream from the femtocell using a first wireless communications protocol, wherein the first wireless communications protocol is a Long Term Evolution, LTE, protocol;
means for receiving a second portion of data packets from the data stream from the wireless transceiver (130) using a second wireless communications protocol, wherein the second wireless communications protocol is a WiFi wireless communications protocol, the wireless transceiver being separate from the femtocell, wherein the second portion of the data packets is received by the wireless transceiver from the femtocell before being sent to the mobile device by the wireless transceiver and wherein the data packets are received by the femtocell from the wireless transceiver before being sent to the mobile device or to the wireless transceiver by the femtocell; and
means for aggregating the first portion of the data packets and the second portion of the data packets to reassemble the data stream at the mobile device.

8. A tangible computer-readable medium, having stored thereon computer-readable instructions, comprising instructions which, when executed by a computer, cause the computer to carry out the steps of any of method claims 1-3, or 5-6.

## Patentansprüche

1. Ein Verfahren zum Aggregieren von Drahtloskommunikationsverkehr in einer Femto-Zelle (115), wobei das Verfahren Folgendes aufweist:
Empfangen (1005), an einer Femto-Zelle, eines Stroms von Datenpaketen für eine Mobileinrichtung (120) von einem Drahtlostransceiver, der mit der Femto-Zelle durch eine Netzwerkschnittstelle verbunden ist;
Auswählen (1010), durch die Femto-Zelle, eines Übertragungsmodus zum Senden von Datenpaketen des Stroms von Datenpaketen von der Femto-Zelle an die Mobileinrichtung, wobei das Auswählen Bestimmen aufweist, ob Datenpakete von dem Strom von Datenpaketen an die Mobileinrichtung unter Nutzung eines ersten Übertragungsmodus, zweiten Übertragungsmodus oder dritten Übertragungsmodus übertragen werden sollen, wobei:
der erste Übertragungsmodus Übertragen der Datenpakete aus dem Strom über eine LTE-Schnittstelle (LTE = Long Term Evolution) der Femto-Zelle aufweist,
der zweite Übertragungsmodus Senden der Datenpakete von der Femto-Zelle an den Drahtlostransceiver (130) zur Übertragung an die Mobileinrichtung zum Übertragen der Datenpakete aus dem Strom über eine WiFi-Schnittstelle des Drahtlostransceivers aufweist,
der dritte Übertragungsmodus Übertragen eines ersten Teils der Datenpakete an die Mobileinrichtung über die LTE-Schnittstelle und Senden eines zweiten Teils der Datenpakete von der Femto-Zelle an den Drahtlostransceiver zur Übertragung an die Mobileinrichtung über die WiFi-Schnittstelle aufweist, und
Senden der Datenpakete gemäß dem ausgewählten Übertragungsmodus (1015).

2. Verfahren nach Anspruch 1, wobei der Drahtlostransceiver (130) ein Drahtlostransceiver eines Drahtlos-Routers ist; oder
wobei Auswählen des Übertragungsmodus Auswählen des Übertragungsmodus basierend wenigstens teilweise auf Verbindungsbedingungen einer LTE-Verbindung zwischen der Femto-Zelle (115) und der Mobileinrichtung (120) aufweist; oder
wobei Auswählen des Übertragungsmodus Auswählen des Übertragungsmodus basierend wenigstens teilweise auf Verbindungsbedingungen einer WiFi-Verbindung zwischen dem Drahtlostransceiver (130) und der Mobileinrichtung aufweist; oder
wobei Auswählen des Übertragungsmodus Auswählen des Übertragungsmodus basierend wenigstens teilweise auf einer Last bzw. Auslastung einer LTE-Verbindung zwischen der Femto-Zelle und der Mobileinrichtung aufweist; oder
wobei Auswählen des Übertragungsmodus Auswählen des Übertragungsmodus basierend wenigstens teilweise auf einer Auslastung einer WiFi-Verbindung zwischen dem Drahtlostransceiver und der Mobileinrichtung aufweist; oder
wobei Auswählen des Übertragungsmodus Auswählen des Übertragungsmodus basierend wenigstens teilweise auf wenigstens einer Auslastung eines Backhauls der Femto-Zelle aufweist; oder
wobei Senden der Datenpakete gemäß dem ausgewählten Übertragungsmodus Einkapseln von Paketen aufweist, die von der Femto-Zelle an die Mobileinrichtung übertragen werden; und das weiter optional Folgendes aufweist:
Bestimmen, ob der Drahtlosrouter (130) eine Überbrückungsfunktionalität vorsieht, und wobei das Einkapseln von Paketen, die von der Femto-Zelle (115) an die Mobileinrichtung (120) gesendet werden, durchgeführt wird, wenn der Drahtlosrouter keine Überbrückungsfunktionalität vorsieht.

3. Verfahren nach Anspruch 1, das weiter Folgendes aufweist:
Senden eines Signals an die Mobileinrichtung (120), das einen Start einer Sitzung aggregierter Daten ansprechend darauf anzeigt, dass der dritte Übertragungsmodus ausgewählt wird; oder
wobei das Auswählen des Übertragungsmodus weiter Folgendes aufweist:
Auswählen des zweiten Übertragungsmodus für LTE-Nutzerebenendaten; und
Auswählen des ersten Übertragungsmodus für LTE-Steuerebenendaten; oder
das weiter Folgendes aufweist:
Senden einer Aggregationsauffindungsnachricht an die Mobileinrichtung;
Empfangen einer Aggregationsauffindungsantwort von der Mobileinrichtung;
Übertragen erster Aggregationsinformation an die Mobileinrichtung;
Empfangen zweiter Aggregationsinformation von der Mobileinrichtung; und
Konfigurieren einer Aggregationsschicht der Femto-Zelle basierend auf der ersten Aggregationsinformation und der zweiten Aggregationsinformation;
und wobei optional
die erste Aggregationsinformation Aggregationsregelinformation aufweist;
oder das weiter Folgendes aufweist:
Testen einer WiFi-Konnektivität mit der Mobileinrichtung.

4. Eine Femto-Zelle zum Aggregieren von Drahtloskommunikationsverkehr, wobei die Femto-Zelle Folgendes aufweist:
Mittel zum Empfangen, an einer Femto-Zelle, eines Stroms von Datenpaketen für eine Mobileinrichtung (120) von einem Drahtlostransceiver (130), der mit der Femto-Zelle durch eine Netzwerkschnittstelle verbunden ist;
Mittel zum Auswählen eines Übertragungsmodus zum Senden von Datenpaketen des Stroms von Datenpaketen von der Femto-Zelle an die Mobileinrichtung, wobei die Mittel zum Auswählen Mittel aufweisen zum Bestimmen,
ob Datenpakete von dem Strom von Datenpaketen an die Mobileinrichtung unter Nutzung eines ersten Übertragungsmodus, zweiten Übertragungsmodus oder dritten Übertragungsmodus übertragen werden sollen, wobei:
der erste Übertragungsmodus Übertragen der Datenpakete aus dem Strom über eine LTE-Schnittstelle (LTE = Long Term Evolution) der Femto-Zelle aufweist,
der zweite Übertragungsmodus Senden der Datenpakete von der Femto-Zelle an den Drahtlostransceiver (130) zur Übertragung an die Mobileinrichtung zum Übertragen der Datenpakete aus dem Strom über eine WiFi-Schnittstelle des Drahtlostransceivers aufweist,
der dritte Übertragungsmodus Übertragen eines ersten Teils der Datenpakete an die Mobileinrichtung über die LTE-Schnittstelle und Senden eines zweiten Teils der Datenpakete von der Femto-Zelle an den Drahtlostransceiver zur Übertragung an die Mobileinrichtung über die WiFi-Schnittstelle aufweist,
und Mittel zum Senden der Datenpakete gemäß dem ausgewählten Übertragungsmodus.

5. Ein Verfahren zum Aggregieren von Drahtloskommunikationsverkehr in einer Mobileinrichtung (120), wobei das Verfahren Folgendes aufweist:
Empfangen, durch die Mobileinrichtung, eines ersten Teils von Datenpaketen aus einem Datenstrom von einer Femto-Zelle (115) unter Nutzung eines ersten Drahtloskommunikationsprotokolls, wobei das erste Drahtloskommunikationsprotokoll ein LTE-Protokoll (LTE = Long Term Evolution) ist;
Empfangen eines zweiten Teils von Datenpaketen aus dem Datenstrom von einem Drahtlostransceiver (130) unter Nutzung eines zweiten Drahtloskommunikationsprotokolls, wobei das zweite Drahtloskommunikationsprotokoll ein WiFi-Drahtloskommunikationsprotokoll ist, wobei der Drahtlostransceiver separat von der Femto-Zelle ist, wobei der zweite Teil der Datenpakete durch den Drahtlostransceiver von der Femto-Zelle empfangen wird, bevor er an die Mobileinrichtung durch den Drahtlostransceiver gesendet wird, und wobei die Datenpakete durch die Femto-Zelle von dem Drahtlostransceiver empfangen werden, bevor sie an die Mobileinrichtung oder den Drahtlostransceiver durch die Femto-Zelle gesendet werden; und
Aggregieren des ersten Teils der Datenpakete und des zweiten Teils der Datenpakete, um den Datenstrom an der Mobileinrichtung wieder zusammenzusetzen.

6. Verfahren nach Anspruch 5, das weiter Folgendes aufweist:
Empfangen eines Signals von der Femto-Zelle, das einen Start einer Sitzung aggregierter Daten anzeigt vor Empfangen des ersten Teils der Datenpakete und des zweiten Teils der Datenpakete; oder
das weiter Folgendes aufweist:
Empfangen eines Signals von der Femto-Zelle, das ein Ende der Sitzung aggregierter Daten anzeigt nach Empfangen des ersten Teils der Datenpakete und des zweiten Teils der Datenpakete; und/oder
wobei der Drahtlostransceiver ein Drahtlostransceiver eines Drahtlosrouters ist.

7. Ein System zum Aggregieren von Drahtloskommunikationsverkehr in einer Mobileinrichtung (120), wobei das System die Mobileinrichtung, eine Femto-Zelle und einen Drahtlostransceiver aufweist, wobei die Mobileinrichtung Folgendes aufweist:
Mittel zum Empfangen, durch die Mobileinrichtung, eines ersten Teils von Datenpaketen aus einem Datenstrom von einer Femto-Zelle unter Nutzung eines ersten Drahtloskommunikationsprotokolls, wobei das erste Drahtloskommunikationsprotokoll ein LTE-Protokoll (LTE = Long Term Evolution) ist;
Mittel zum Empfangen eines zweiten Teils von Datenpaketen aus dem Datenstrom von einem Drahtlostransceiver (130) unter Nutzung eines zweiten Drahtloskommunikationsprotokolls, wobei das zweite Drahtloskommunikationsprotokoll ein WiFi-Drahtloskommunikationsprotokoll ist, wobei der Drahtlostransceiver separat von der Femto-Zelle ist, wobei der zweite Teil der Datenpakete durch den Drahtlostransceiver von der Femto-Zelle empfangen wird, bevor er an die Mobileinrichtung durch den Drahtlostransceiver gesendet wird, und wobei die Datenpakete durch die Femto-Zelle von dem Drahtlostransceiver empfangen werden, bevor sie an die Mobileinrichtung oder den Drahtlostransceiver durch die Femto-Zelle gesendet werden; und
Mittel zum Aggregieren des ersten Teils der Datenpakete und des zweiten Teils der Datenpakete, um den Datenstrom an der Mobileinrichtung wieder zusammenzusetzen.

8. Ein materielles computerlesbares Medium mit darauf gespeicherten von einem Computer ausführbaren Instruktionen, die Instruktionen aufweisen, die, wenn sie durch einen Computer ausgeführt werden, den Computer veranlassen zum Durchführen der Schritte nach einem der Verfahrensansprüche 1-3 oder 5-6.

## Revendications

1. Procédé destiné à agréger un trafic de communication sans fil dans une femto-cellule (115), le procédé comprenant :
la réception (1005) au niveau d'une femto-cellule d'un flux de paquets de données destiné à un dispositif mobile (120) en provenance d'un émetteur-récepteur sans fil connecté à la femto-cellule par l'intermédiaire d'une interface de réseau ;
la sélection (1010), par la femto-cellule, d'un mode de transmission, pour envoyer des paquets de données du flux de paquets de données depuis la femto-cellule au dispositif mobile, la sélection comprenant la détermination de s'il faut transmettre les paquets de données à partir du flux de paquets de données au dispositif mobile en utilisant un premier mode de transmission, un deuxième mode de transmission ou un troisième mode de transmission, dans lequel :
le premier mode de transmission comprend la transmission des paquets de données à partir du flux par l'intermédiaire d'une interface à évolution à long terme, LTE, de la femto-cellule,
le deuxième mode de transmission comprend l'envoi des paquets de données depuis la femto-cellule à l'émetteur-récepteur sans fil (130) pour qu'ils soient transmis au dispositif mobile pour transmettre les paquets de données à partir du flux par l'intermédiaire d'une interface WiFi de l'émetteur-récepteur sans fil,
le troisième mode de transmission comprend la transmission d'une première partie des paquets de données au dispositif mobile par l'intermédiaire de l'interface à LTE et l'envoi d'une deuxième partie des paquets de données depuis la femto-cellule à l'émetteur-récepteur pour être transmis au dispositif mobile par l'intermédiaire de l'interface WiFi, et
l'envoi des paquets de données conformément au mode de transmission sélectionné (1015).

2. Procédé selon la revendication 1, dans lequel l'émetteur-récepteur sans fil (130) est un émetteur-récepteur sans fil d'un routeur sans fil ; ou
dans lequel la sélection du mode de transmission comprend la sélection du mode de transmission sur la base au moins en partie de conditions de liaison d'une liaison LTE entre la femto-cellule (115) et le dispositif mobile (120) ; ou
dans lequel la sélection du mode de transmission comprend la sélection du mode de transmission sur la base au moins en partie de conditions de liaison d'une liaison WiFI entre l'émetteur-récepteur sans fil (130) et le dispositif mobile ; ou
dans lequel la sélection du mode de transmission comprend la sélection du mode de transmission sur la base au moins en partie du chargement d'une liaison LTE entre la femto-cellule et le dispositif mobile ; ou
dans lequel la sélection du mode de transmission comprend la sélection du mode de transmission sur la base au moins en partie du chargement d'une liaison WiFi entre l'émetteur-récepteur sans fil et le dispositif mobile ; ou
dans lequel la sélection du mode de transmission comprend la sélection du mode de transmission sur la base au moins en partie d'au moins le chargement d'une liaison terrestre de la femto-cellule ; ou
dans lequel l'envoi des paquets de données conformément au mode de transmission sélectionné comprend l'encapsulation de paquets transmis depuis la femto-cellule au dispositif mobile ; et comprenant en outre optionnellement :
la détermination de si le routeur sans fil (130) assure une fonctionnalité de pontage, et dans lequel l'encapsulation des paquets transmis depuis la femto-cellule (115) au dispositif mobile (120) est effectuée si le routeur sans fil n'assure pas de fonctionnalité de pontage.

3. Procédé selon la revendication 1, comprenant en outre :
l'envoi d'un signal au dispositif mobile (120) indiquant un début d'une session de données agrégées en réponse à la sélection du troisième mode de transmission ; ou
dans lequel la sélection du mode de transmission comprend en outre :
la sélection du deuxième mode de transmission pour des données du plan utilisateur à LTE ; et
la sélection du premier mode de transmission pour des données du plan de commande à LTE ; ou
comprenant en outre :
l'envoi d'un message de découverte d'agrégation au dispositif mobile ;
la réception d'une réponse de découverte d'agrégation en provenance du dispositif mobile ;
la transmission de premières informations d'agrégation au dispositif mobile ;
la réception de deuxièmes informations d'agrégation en provenance du dispositif mobile ; et
la configuration d'une couche d'agrégation de la femto-cellule sur la base des premières informations d'agrégation et des deuxièmes informations d'agrégation ; et, optionnellement,
dans lequel les premières informations d'agrégation comprennent des informations de stratégie d'agrégation ; ou comprenant en outre :
le test de la connectivité WiFi avec le dispositif mobile.

4. Femto-cellule destinée à agréger un trafic de communication sans fil, la femto-cellule comprenant :
des moyens pour recevoir au niveau d'une femto-cellule un flux de paquets de données destiné à un dispositif mobile (120) en provenance d'un émetteur-récepteur sans fil (130) connecté à la femto-cellule par l'intermédiaire d'une interface de réseau ;
des moyens pour sélectionner un mode de transmission, pour envoyer des paquets de données du flux de paquets de données depuis la femto-cellule au dispositif mobile, les moyens pour sélectionner comprenant des moyens pour déterminer s'il faut transmettre les paquets de données à partir du flux de paquets de données au dispositif mobile en utilisant un premier mode de transmission, un deuxième mode de transmission ou un troisième mode de transmission, dans laquelle :
le premier mode de transmission comprend la transmission des paquets de données à partir du flux par l'intermédiaire d'une interface à évolution à long terme, LTE, de la femto-cellule,
le deuxième mode de transmission comprend l'envoi des paquets de données depuis la femto-cellule à l'émetteur-récepteur sans fil (130) pour qu'ils soient transmis au dispositif mobile pour transmettre les paquets de données à partir du flux par l'intermédiaire d'une interface WiFi de l'émetteur-récepteur sans fil,
le troisième mode de transmission comprend la transmission d'une première partie des paquets de données au dispositif mobile par l'intermédiaire de l'interface à LTE et l'envoi d'une deuxième partie des paquets de données depuis la femto-cellule à l'émetteur-récepteur pour transmettre au dispositif mobile par l'intermédiaire de l'interface WiFi, et des moyens pour envoyer des paquets de données conformément au mode de transmission sélectionné.

5. Procédé destiné à agréger le trafic de communication sans fil dans un dispositif mobile (120), le procédé comprenant :
la réception, par le dispositif mobile, d'une première partie de paquets de données à partir d'un flux de données provenant d'une femto-cellule (115) en utilisant un premier protocole de communication sans fil, dans lequel le premier protocole de communication sans fil est un protocole à évolution à long terme, LTE ;
la réception d'une deuxième partie de paquets de données à partir du flux de données provenant d'un émetteur-récepteur sans fil (130) en utilisant un deuxième protocole de communication sans fil, dans lequel le deuxième protocole de communication sans fil est un protocole de communication sans fil WiFi, l'émetteur-récepteur sans fil étant séparé de la femto-cellule, dans lequel la deuxième partie de paquets de données est reçue par l'émetteur-récepteur sans fil en provenance de la femto-cellule avant d'être envoyé au dispositif mobile par l'émetteur-récepteur sans fil et dans lequel les paquets de données sont reçues par la femto-cellule en provenance de l'émetteur-récepteur sans fil avant d'être envoyés au dispositif mobile ou à l'émetteur-récepteur sans fil par la femto-cellule ; et
l'agrégation de la première partie des paquets de données et de la deuxième partie des paquets de données pour réassembler le flux de données au niveau du dispositif mobile.

6. Procédé selon la revendication 5, comprenant en outre :
la réception d'un signal en provenance de la femto-cellule indiquant un début d'une session de données agrégées avant la réception de la première partie du paquet de données et de la deuxième partie des paquets de données ; ou
comprenant en outre :
la réception d'un signal en provenance de la femto-cellule indiquant une fin de la session de données agrégées après réception de la première partie du paquet de données et de la deuxième partie des paquets de données ; et/ou
dans lequel l'émetteur-récepteur sans fil est un émetteur-récepteur sans fil d'un routeur sans fil.

7. Système destiné à agréger un trafic de communication sans fil dans un dispositif mobile (120), le système comprenant le dispositif mobile, une femto-cellule et un émetteur-récepteur sans fil, le dispositif mobile comprenant :
des moyens pour recevoir, par le dispositif mobile, une première partie de paquets de données à partir d'un flux de données provenant d'une femto-cellule en utilisant un premier protocole de communication sans fil, dans lequel le premier protocole de communication sans fil est un protocole à évolution à long terme, LTE ;
des moyens pour recevoir une deuxième partie de paquets de données à partir du flux de données en provenance de l'émetteur-récepteur sans fil (130) en utilisant un deuxième protocole de communication sans fil, dans lequel le deuxième protocole de communication sans fil est un protocole de communication sans fil WiFi, l'émetteur-récepteur sans fil étant séparé de la femto-cellule, dans lequel la deuxième partie de paquets de données est reçue par l'émetteur-récepteur sans fil en provenance de la femto-cellule avant d'être envoyé au dispositif mobile par l'émetteur-récepteur sans fil et dans lequel les paquets de données sont reçues par la femto-cellule en provenance de l'émetteur-récepteur sans fil avant d'être envoyés au dispositif mobile ou à l'émetteur-récepteur sans fil par la femto-cellule ; et
des moyens pour agréger la première partie des paquets de données et la deuxième partie des paquets de données pour réassembler le flux de données au niveau du dispositif mobile.

8. Support tangible lisible par ordinateur, sur lequel sont stockées des instructions lisibles par ordinateur, comprenant des instructions qui, lorsqu'elles sont exécutées par un ordinateur, amènent l'ordinateur à mettre en oeuvre les étapes d'un quelconque procédé selon les revendications 1 à 3 ou 5 à 6.
